# FASCICULE DE BREVET EUROPEEN

(11) **EP 3 164 258 B1**
(45) Date de publication et mention de la délivrance du brevet: **19.02.2020**
(21) Numéro de dépôt: 15736570.1
(22) Date de dépôt: 29.06.2015
(51) Int. Cl.: B29C 65/34, B29C 65/78, B29C 65/82, F16L 1/15, F16L 1/20, F16L 13/02, F16L 47/03, F16L 58/10, F16L 58/18, G01N 29/04, G01N 29/22, G01N 29/265, B29L 23/00, B29L 9/00

(54) **DISPOSITIF ET PROCÉDÉ DE MISE EN PLACE D'UN MANCHON TUBULAIRE DE JONCTION POUR CONDUITE COMPORTANT UN CHEMISAGE INTERNE**
VORRICHTUNG UND VERFAHREN ZUR INSTALLATION EINER ROHRFÖRMIGEN VERBINDUNGSMUFFE FÜR EIN ROHR MIT EINER INNEREN AUSKLEIDUNG
DEVICE AND METHOD FOR INSTALLING A TUBULAR JOINT SLEEVE FOR A PIPE COMPRISING AN INNER LINING

(30) Priorité: 02.07.2014 FR 1456299
(43) Date de publication de la demande: 10.05.2017
(73) Titulaire: SAIPEM S.A., 78180 Montigny Le Bretonneux (FR)
(72) Inventeur: PIONETTI, François Régis, 50450 La Baleine (FR); LIROLA, François, 92400 Courbevoie (FR)
(74) Mandataire: Cabinet Beau de Loménie
(86) Numéro de dépôt international: PCT/FR2015/051750
(87) Numéro de publication internationale: WO 2016/001546

(56) Documents cités:
- WO-A1-2010/041016
- WO-A1-2012/017171
- DE-A1- 2 440 086
- DE-A1-102011 103 855
- DE-B1- 2 719 320
- DE-U1-202011 101 425
- JP-A- H10 119 135

## Description

La présente invention concerne le domaine des conduites réalisées par assemblage d'éléments unitaires de conduite en acier, comportant un chemisage interne en matière plastique protégeant les parois en acier de ladite conduite de la corrosion.

La présente invention concerne plus particulièrement un dispositif et un procédé de mise en place d'un manchon tubulaire de jonction en matière plastique pour l'assemblage de conduite à partir de dits éléments unitaires de conduite et mise en œuvre d'une électro-fusion, ledit manchon étant appliqué et solidarisé au dit chemisage par électro-fusion par effet Joule au niveau de la jonction entre les extrémités bout à bout de deux éléments unitaires de conduite tel que décrit notamment dans WO 2012/017171.

Le document WO 2012/017171 divulgue un dispositif utile pour la mise en place d'un manchon tubulaire de jonction à l'intérieur de l'extrémité d'un premier élément de conduite en acier à chemisage interne en matériau thermoplastique et utile pour l'assemblage bout à bout de l'extrémité de ce premier élément de conduite équipée d'un dit manchon avec l'extrémité dépourvue de dit manchon d'un deuxième élément de conduite à chemisage interne en matériau thermoplastique, lesdites extrémités ainsi bout à bout des deux éléments de conduite étant destinées à être soudées l'une à l'autre, ledit manchon présentant à chaque extrémité une partie terminale de paroi tubulaire, de préférence d'épaisseur réduite par rapport à l'épaisseur de la partie courante adjacente de la paroi tubulaire dudit manchon, ledit manchon présentant à au moins une, de préférence à chacune, desdites parties terminales du manchon un fil chauffant par effet Joule disposé, de préférence en spirale, en surface externe de ladite partie terminale dudit manchon apte à créer par chauffage une zone de contact étanche par fusion entre elles des matières constitutives d'une partie au moins de ladite partie terminale du manchon et respectivement une partie terminale de dit chemisage en contact l'une avec l'autre, et parcourues par ledit fil chauffant, ledit dispositif de mise en place de manchon comprenant un mandrin gonflable comprenant une paroi périphérique expansible radialement par gonflage, ladite première paroi comprenant au moins un premier connecteur électrique apte à être connectée à une extrémité d'un dit fil chauffant, et également un ombilical comprenant au moins un conduit d'alimentation en air comprimé pour le gonflage du mandrin gonflable et un conduit d'alimentation électrique relié au dit premier connecteur électrique.

La présente invention concerne plus particulièrement des conduites véhiculant des fluides corrosifs, notamment des conduites sous-marines véhiculant de l'eau de mer sous pression destinée à être injectée dans des puits de champs pétroliers, et plus particulièrement encore des conduites de liaison reposant au fond de la mer ou des conduites de liaison fond/surface.

La présente invention concerne plus particulièrement encore le raccordement de deux éléments unitaires de conduite à chemisage interne, et plus particulièrement encore d'éléments de 24 m ou 48 m de longueur installées sur des champs pétrolifères en mer profonde, par 2000 à 3000 m, voire plus, à partir de navire de pose équipés de tours de pose en J.

De façon connue, les extrémités desdits éléments de conduite sont assemblés bout à bout par soudage et le chemisage interne à l'intérieur desdits éléments de conduite s'arrêtent à une distance significative, par exemple 100 à 300 mm de l'extrémité desdits éléments de conduite, de manière à ce que l'échauffement de la paroi en acier lors du soudage de leurs extrémités, ne vienne pas endommager ladite chemise. Le problème qui se pose alors est d'assurer la protection contre la corrosion de la zone non chemisée comprise entre l'extrémité de la chemise de l'élément de conduite N et l'extrémité de la chemise de l'élément de conduite suivant N+1.

On connaît le brevet WO 2006/042925 de la demanderesse qui décrit un tel assemblage de conduites revêtues de chemisage interne. La méthode de chemisage interne dite de « Swagelining ».

Le terme « chemise » ou « chemisage interne » utilisé ci-après correspond à un revêtement aussi connu dans le métier sous la dénomination de « liner ».

Dans WO 2012/017171, la demanderesse a décrit un mode d'assemblage amélioré de deux éléments de conduite en acier revêtus de chemisage interne, à l'aide d'un manchon tubulaire de jonction, qui soit à la fois davantage fiable mécaniquement en termes d'étanchéité tout en étant simple et peu coûteux à réaliser, notamment dans le cas d'un assemblage sur site à partir d'un navire en mer, d'éléments de conduite de longueur réduite adaptés à la pose à partir d'un navire en mer.

Pour ce faire, le manchon tubulaire de jonction est intercalé entre 2 éléments de conduite en acier à chemisage interne en matériau thermoplastique assemblés bout à bout, les extrémités des deux éléments de conduite étant soudées l'une à l'autre. Ledit manchon tubulaire de jonction réalisé en matériau thermoplastique, de préférence identique à celui dudit chemisage, est inséré à l'intérieur de la conduite au niveau des extrémités bout à bout des deux éléments de conduite, de manière à ce que les parties terminales aux extrémités dudit manchon soient, en partie au moins, en contact étanche respectivement avec des parties terminales aux extrémités desdits chemisages internes des deux éléments de conduite. Ledit manchon tubulaire de jonction présente à chacune desdites parties terminales du manchon au niveau de ladite zone de contact étanche avec les parties terminales desdits chemisages un fil chauffant par effet Joule, de préférence disposé en spirale, en surface externe de chaque dite partie terminale aux extrémités dudit manchon. Ladite zone de contact étanche est une zone de soudure par fusion entre elles des matières constitutives de chaque dite partie terminale du manchon et respectivement chaque dite partie terminale de dit chemisage en contact l'une avec l'autre et parcourues par ledit fil chauffant.

Cette étanchéité du contact manchon/chemise est importante pour éviter tout contact entre l'eau de mer et la zone de la soudure en vis-à-vis dudit manchon tubulaire. Un tel contact direct pourrait en effet conduire, en cas de pénétration d'eau entre le manchon et la conduite, lorsque la conduite est une conduite d'injection d'eau, à des phénomènes électrochimiques de corrosion de la conduite en acier et de la soudure dans la mesure où ladite liaison mécanique entre le manchon et le chemisage n'est pas nécessairement étanche.

On comprend que ladite zone de fusion est obtenue par alimentation électrique dudit fil chauffant par effet Joule créant un chauffage de ladite zone au niveau de l'interface desdites surfaces de contact des parties terminales du manchon et du chemisage. Ladite zone de soudure par fusion, (ci-après en abrégé « zone de fusion ») fusion est donc réalisée dans ce cas par le procédé connu dit « électro-fusion », qui permet de réaliser une zone de contact étanche particulièrement fiable et résistante.

Ledit fil chauffant est appliqué sur une surface externe d'une partie terminale du manchon avec une extrémité de fil chauffant rejoignant la surface interne dudit manchon au niveau d'un connecteur électrique ce qui permet de réaliser plus aisément l'alimentation électrique du fil chauffant depuis l'intérieur de la conduite lors de l'assemblage de la conduite comme explicité ci-après.

Ledit manchon peut être préfabriqué avec un dit fil chauffant déjà appliqué à sa surface, ce qui est plus facile à réaliser que l'application in situ à l'intérieur desdits éléments de conduite d'un fil chauffant appliqué en surface desdits chemisages internes de l'élément de conduite *in situ* à l'intérieur de la conduite avant l'insertion dudit manchon à l'intérieur dudit élément de conduite.

Dans un autre mode de réalisation, le fil chauffant n'est pas appliqué en spirale, c'est-à-dire ne réalise pas une pluralité de spires disposées successivement dans la direction de leur axe de révolution pour parcourir ladite zone de fusion, mais ledit fil réalise au moins un tour autour dudit axe de révolution de la zone de fusion en réalisant une pluralité d'aller et venues entre les deux extrémités de ladite zone de fusion dans ladite direction axiale de révolution de révolution de ladite zone de fusion.

Un procédé de réalisation d'une conduite avec un tel manchon de jonction comprend l'assemblage d'éléments de conduites comprenant un dit chemisage avec une partie terminale d'épaisseur réduite à chaque extrémité, et un dit manchon tubulaire de jonction inséré à seulement une extrémité de chaque dit élément de conduite et dépassant de celle-ci, le dépassement dudit manchon définissant une extrémité mâle de chaque dit élément de conduite apte à être assemblée avec une extrémité dépourvue de dit manchon définissant une extrémité femelle d'un autre dit élément de conduite. Pour cet assemblage on réalise les étapes suivantes dans lesquelles :
1) on introduit et insère en force ladite extrémité femelle dépourvue de manchon tubulaire de jonction d'un élément de conduite autour de l'extrémité mâle comprenant un manchon tubulaire de jonction fixe qui dépasse de l'autre élément de conduite, dans la direction longitudinale (XX') axialement, jusqu'à ce que ladite partie terminale du manchon de la ladite extrémité mâle dudit élément de conduite soit en contact avec ladite partie terminale du chemisage de ladite extrémité femelle dudit élément de conduite à assembler, l'un des deux éléments de conduite étant un élément terminal d'une conduite en cours d'assemblage, puis
2) on alimente en électricité ledit fil chauffant de ladite partie terminale du manchon, de préférence en exerçant simultanément une pression de ladite partie terminale de manchon contre ladite partie terminale de chemisage en contact l'une avec l'autre, pour réaliser une dite zone de soudure par électro-fusion au niveau d'une partie au moins de l'interface des surfaces de chaque dite partie terminale du manchon et chaque dite partie terminale de chemisage en contact l'une avec l'autre et parcourues par la double spirale de fil chauffant à la surface du manchon, pour réaliser une dite zone de contact étanche par fusion, et
3) on réalise le soudage externe périphérique des extrémités des deux éléments de conduite bout à bout.

Dans WO 2012/017171, on exerce ladite pression contre la surface interne du manchon au niveau de sa dite partie terminale en introduisant à l'intérieur du manchon un dispositif comprenant une cellule gonflable, initialement au moins partiellement dégonflée, ladite cellule comprenant ou coopérant à sa surface avec un connecteur électrique d'alimentation électrique que l'on positionne de telle sorte que ledit connecteur électrique de la cellule puisse coopérer avec le connecteur électrique sur la surface interne du manchon incluant les bornes du fil chauffant lorsque l'on gonfle ladite cellule, puis on gonfle ladite cellule.

Plus précisément, dans WO2012/017171 en référence aux figures 9A-9E, on utilise un mandrin expansible 20 qui permet de réaliser l'électro fusion du joint entre le manchon tubulaire 3 et la chemise interne 2 au niveau de la surface de révolution 2a. Le mandrin 20 comporte un noyau rigide 21 en forme de jante, une membrane expansible, sous forme d'une chambre à air 22 qui peut être gonflée par l'intermédiaire d'un ombilical 23 alimenté en air comprimé, ledit ombilical amenant également le courant électrique jusqu'à un connecteur d'alimentation 20a. Ainsi, on introduit le mandrin 20 à l'intérieur du manchon tubulaire de jonction 3, de manière à positionner le connecteur 20a en face du connecteur complémentaire 7 dudit manchon tubulaire de jonction. Puis, on gonfle le mandrin, et l'on injecte le courant électrique qui fait fondre toute la zone recouverte par le fil chauffant. L'expansion du mandrin permet de garantir une compacité dans le plan de fusion, ainsi que l'absence de bulles d'air, ces dernières étant préjudiciables à une bonne étanchéité au niveau de la surface de fusion.

D'autre part, ledit mandrin ne permet pas de réaliser l'insertion et la mise en place dudit manchon de jonction préalablement à la soudure par électro-fusion les opérations de mise en place du manchon étant délicate à réaliser. Enfin, il apparait nécessaire de pouvoir contrôler la qualité de la soudure réalisée par électro-fusion.

Le but de la présente invention est de surmonter ces problèmes et inconvénients et plus généralement d'améliorer les dispositif et procédé de mise en place d'un tel manchon tubulaire de jonction en matière plastique pour l'assemblage étanche de conduite comportant un chemisage interne, ledit manchon étant appliqué et solidarisé au dit chemisage par électro-fusion par effet Joule.

Pour ce faire, la présente invention fournit un dispositif utile pour la mise en place d'un manchon tubulaire de jonction à l'intérieur de l'extrémité d'un premier élément de conduite en acier à chemisage interne en matériau thermoplastique et utile pour l'assemblage bout à bout de l'extrémité de ce premier élément de conduite équipée d'un dit manchon avec l'extrémité dépourvue de dit manchon d'un deuxième élément de conduite à chemisage interne en matériau thermoplastique, lesdites extrémités ainsi bout à bout des deux éléments de conduite étant destinées à être soudées l'une à l'autre, ledit manchon présentant à chaque extrémité une partie terminale de paroi tubulaire, de préférence d'épaisseur réduite par rapport à l'épaisseur de la partie courante adjacente de la paroi tubulaire dudit manchon, ledit manchon présentant à au moins une, de préférence à chacune, desdites parties terminales du manchon un fil chauffant par effet Joule disposé, de préférence en spirale, en surface externe de ladite partie terminale dudit manchon apte à créer par chauffage une zone de contact étanche par fusion entre elles des matières constitutives d'une partie au moins de ladite partie terminale du manchon et respectivement une partie terminale de dit chemisage en contact l'une avec l'autre, et parcourues par ledit fil chauffant, ledit dispositif de mise en place de manchon comprenant un mandrin d'axe longitudinale (XX') supportant en surface au moins une première chambre gonflable comprenant une paroi périphérique expansible radialement par gonflage, ladite première paroi comprenant au moins un premier connecteur électrique apte à être connectée à une extrémité d'un dit fil chauffant, et ledit mandrin supportant également un ombilical comprenant au moins un conduit d'alimentation en air comprimé pour le gonflage de ladite première chambre gonflable et un conduit d'alimentation électrique relié au dit premier connecteur électrique.

Selon l'invention ledit mandrin supporte en outre en surface externe une deuxième chambre gonflable comprenant une paroi périphérique expansible radialement par gonflage, espacée de ladite première chambre gonflable dans ladite direction longitudinale et ledit mandrin supporte en outre un dispositif de contrôle de soudure, ledit ombilical traversant l'intérieur dudit mandrin et comprenant des conduits d'alimentation en électricité, et de préférence aussi en eau, desdits moyens de contrôle de soudure.

De préférence, ledit dispositif de contrôle de soudure est disposé dans la direction longitudinale du mandrin en amont ou en aval des deux dites première et deuxième chambres, de préférence de l'autre côté de ladite première chambre que ladite deuxième chambre. En d'autres termes, ladite première chambre est disposée entre les dit dispositif de contrôle de soudure et ladite deuxième chambre.

Les procédé de mise en place et mise en œuvre du manchon avec le dispositif selon la présente invention sont facilités du fait que ladite deuxième chambre permet de :
- faciliter le guidage et permettre le déplacement longitudinal plus aisé du dispositif selon l'invention à l'intérieur d'une conduite et/ou d'un manchon, du fait que les deux dites première et deuxième chambres sont partiellement gonflées jusqu'à un diamètre légèrement inférieur à celui de la conduite ou respectivement du manchon, les deux chambres étant espacées dans la direction longitudinale de manière à venir buter sur la paroi de la conduite et du manchon et ainsi maintenir le mandrin dans la direction axiale de la conduite ou du manchon en dépit du contre poids que représente ledit dispositif de contrôle de soudure, et
- fixer le dispositif selon l'invention l'intérieur dudit manchon, et ainsi stabiliser le mandrin par rapport au dit manchon pour ajuster sa position avant la réalisation ladite électro-fusion, par gonflage maximale de ladite deuxième chambre gonflable celle-ci étant ainsi plaquées et solidarisées à la paroi interne du manchon, en dépit du contre poids que représente lesdits moyens de contrôle de soudure, l'ajustement de position consistant à pré positionner ladite première chambre en vis à vis de ladite partie terminale de manchon à soudée et le raccordement de son connecteur électrique après gonflage de la première chambre, et
- stabiliser le dispositif selon l'invention par rapport au dit manchon par gonflage maximal des deux dites première et deuxième chambres ainsi plaquées et solidarisées à la paroi interne du manchon, pendant la réalisation ladite électro-fusion et en suite pendant la mise en œuvre mobile desdits moyens de contrôle de soudure.

De préférence, les deux dites première et deuxième chambres gonflable s'étendent sur une longueur l1 et respectivement l2 et sont espacées d'une distance d dans la direction longitudinale du mandrin telles que lorsqu'une dite première chambre gonflable est en expansion radiale de plaquage contre la partie terminale du manchon, notamment lorsque celle-ci est disposée contre la partie terminale du chemisage interne de la conduite pour réaliser l'électro-fusion, la deuxième chambre gonflable se trouve en vis à vis et peut venir se plaquer contre une partie de la paroi interne tubulaire dudit manchon.

On comprend que la position du dispositif de contrôle de soudure est alors à l'extérieur du manchon. Et, lorsque lesdits moyens de contrôle sont disposés en vis à vis d'une partie terminale d'électro-fusion, au moins la première chambre gonflable, de préférence les deux première et deuxième chambres gonflables en expansion radiale peuvent venir se plaquer contre la paroi interne du manchon.

De préférence, ledit dispositif de contrôle de soudure comprend :
- au moins une sonde à ultrason, et
- au moins une buse d'injection d'eau alimentée en eau par un conduit passant dans ledit ombilical, et
- de préférence des moyens d'inspection visuelle, de préférence une caméra.

La camera permet de positionner le dispositif en vue de la soudure et à bien placer le module de contrôle de la soudure à ultrasons au droit de la soudure à contrôler puis inspecter la soudure.

Plus particulièrement, ladite sonde à ultrasons et/ou ladite buse d'injection d'eau est (ou sont) apte(s) à être déplacé(s) en rotation en vis-à-vis des parties d'extrémité dudit manchon après électro-fusion, selon un axe de rotation disposé dans l'axe longitudinal dudit mandrin. On comprend qu'ils sont monté(s) sur ledit mandrin de manière motorisée pour ce faire.

On connaît des dispositifs de contrôle de soudure par sonde à ultrasons. Ces dispositifs sont constitués d'un émetteur piézoélectrique en matériau céramique qui émet une onde acoustique ultrasonore pendant un court instant qui est transmise dans la masse d'acier et de métal de la conduite et de la soudure et se réfléchit sur la surface opposée de la conduite. En général, ledit émetteur joue aussi le rôle de capteur, le signal correspondant à l'onde reçue étant transmis par des moyens de traitement électronique à un ordinateur. Dans le cadre du contrôle d'une soudure plastique, l'onde se propage et se réfléchit sur tout obstacle ou défaut rencontré. Les obstacles incluent : les câbles nécessaires à l'apport de puissance pour l'électro-fusion, l'interface plastique/plastique en l'absence de soudure et l'interface plastique/acier. Plus l'écho de l'interface entre le plastique et l'acier est important plus la qualité de la soudure est bonne.

On connaît aussi des sondes à ultrasons comportant une série d'émetteurs récepteurs et qui sont appelées sondes multifaisceaux ou «phased array». La structure de fonctionnement sont décrits dans EP 1 899 721, en particulier de façon à améliorer le contrôle de la soudure, les différents émetteurs peuvent émettre des ondes dans différentes directions ce qui permet d'étendre la zone géographique d'inspection.

Ces dispositifs sont en général mis en œuvre de manière manuelle par un opérateur et sont déplacés contre et à proximité de la soudure d'une part, axialement en translation d'avant en arrière dans la zone de la soudure, et d'autre part, sur toute la circonférence de la périphérie de la conduite dans ladite zone de soudure, tel que dans WO 01/71338.

En procédant depuis l'intérieur de la conduite, un opérateur a de grandes difficultés de positionner de manière manuelle avec précision la sonde ultrasons, non seulement en raison de la distance de la zone de soudure à inspecter par rapport à l'extrémité de la conduite, mais aussi en raison de la difficulté de visualiser correctement la position exacte de la soudure à contrôler, ce qui rend alors très délicat la mise en évidence des défauts critiques de la soudure. Ce problème est d'autant plus accentué que le diamètre de la conduite interne est plus petit. De plus, lorsque l'opérateur repère un défaut, il ne connaît pas avec une précision extrême le positionnement exact dudit défaut, du fait même qu'il opère de manière manuelle. Dans EP 1 899 721 on met en œuvre, un chariot motorisé indépendant déplacé à l'intérieur de la conduite.

De préférence, ledit mandrin supporte en outre des moyens d'obturation réversible du passage entre le mandrin et la paroi interne du manchon ou de la conduite, lesdits moyens d'obturation étant disposés dans ladite direction longitudinale du mandrin de sorte que lesdits moyens de contrôle de soudure soient disposés entre lesdits moyens d'obturation et au moins une dite premier ou deuxième chambre.

On comprend que lesdits moyens d'obturation réversible peuvent ainsi soit fermer le passage entre le mandrin et la paroi interne du manchon lorsque la partie du mandrin supportant lesdits moyens d'obturation est positionnée à l'intérieur dit manchon ; soit ainsi fermer le passage entre le mandrin et de la conduite lorsque la partie du mandrin supportant lesdits moyens d'obturation est positionnée à l'intérieur de la conduite. Ces moyens d'obturation sont dits réversibles en ce qu'ils peuvent être actionné pour fermer le passage comme décrit ci-dessus et actionné inversement pour rouvrir ledit passage et permettre le déplacement longitudinal du dispositif selon l'invention.

Plus particulièrement, lesdits moyens d'obturation réversible sont constitués par une troisième chambre gonflable comprenant une paroi périphérique expansible radialement par gonflage.

Plus particulièrement encore, ladite paroi expansible de ladite deuxième chambre gonflable comprend au moins un connecteur électrique apte à être relié à l'extrémité d'un dit fil chauffant.

On comprend que :
- lesdites première et deuxième chambres gonflables sont disposées de façon annulaire ou torique autour du mandrin cylindrique ou d'un noyau rigide formant une jante autour du mandrin, et
- lesdits connecteurs électriques sont reliés ou aptes à être reliés à un conduit d'alimentation électrique contenu dans ledit ombilical et traversant la ou lesdites première et deuxième chambres gonflables en contenant, et lesdites chambres gonflables sont aussi reliées à des conduits d'alimentation en air comprimé contenu dans ledit ombilical.

Dans un mode de réalisation particulier, lesdites chambres gonflables sont formées par une enveloppe souple ou semi-rigide tubulaire à section transversale circulaire disposée autour dudit mandrin cylindrique et selon le même axe longitudinal XX' que ledit mandrin, les bords circulaires à chaque extrémité longitudinale de chaque dite enveloppe rejoignant la paroi externe dudit mandrin de sorte que sous l'effet du gonflage de ladite chambre ladite enveloppe prend une forme bombée convexe en section longitudinale axial formant la paroi expansée radialement de ladite chambre.

La présente invention fournit aussi un procédé de mise en place d'un manchon tubulaire de jonction au niveau d'une extrémité d'un élément unitaire de conduite à chemisage interne en matériau thermoplastique pour fixer un dit manchon en partie terminale d'un dit chemisage, ledit manchon présentant à chaque extrémité une partie terminale de paroi tubulaire, de préférence d'épaisseur réduite par rapport à l'épaisseur de la partie courante adjacente de la paroi tubulaire dudit manchon, ledit manchon présentant à au moins une, de préférence à chacune, desdites parties terminales du manchon un fil chauffant par effet Joule disposé, de préférence en spirale, en surface externe de ladite partie terminale dudit manchon et on crée par chauffage une zone de contact étanche par fusion entre elles des matières constitutives d'une partie au moins de ladite partie terminale du manchon et respectivement une partie terminale de dit chemisage en contact l'une avec l'autre, et parcourues par ledit fil chauffant, à l'aide d'un dispositif de mise en place de manchon selon l'invention.

Plus particulièrement, on réalise les étapes suivantes, de préférence sur le pont d'un navire de pose ou à terre:
i.1) on positionne ledit dispositif de mise en place de manchon à l'intérieur dudit manchon de sorte qu'au moins une dite première chambre gonflable soit en position en vis-à-vis d'une première partie terminale du manchon avec son premier connecteur en vis à vis d'une extrémité de dit fil chauffant, l'autre desdites première et deuxième chambres gonflables étant en vis à vis de la paroi interne de la partie courante du manchon et on gonfle au moins ladite deuxième chambre gonflable de manière à solidariser le dispositif de mise en place de manchon avec ledit manchon en plaquant la paroi expansible de ladite deuxième chambre contre la paroi interne dudit manchon tubulaire, et
i.2) on déplace l'ensemble ainsi formé du manchon et dudit dispositif de mise en place de manchon dans la direction longitudinale (XX') axialement que l'on insère à l'intérieur d'une extrémité ouverte dépourvue de manchon d'un élément de conduite, jusqu'à ce que ladite première partie terminale du manchon soit en contact avec ladite partie terminale du chemisage de ladite extrémité dudit élément de conduite, et
i.3) on gonfle ladite première chambre gonflable pour la plaquer contre la paroi interne de ladite première partie terminale de manchon telle que ledit premier connecteur électrique soit branché, de préférence par l'intermédiaire d'un connecteur électrique complémentaire, à une extrémité d'un dit fil chauffant, et
i.4) on alimente ledit fil chauffant en électricité, en exerçant simultanément une pression de ladite partie terminale de manchon contre ladite partie terminale de chemisage en contact l'une avec l'autre par gonflage de ladite première chambre gonflable pour réaliser une dite zone de soudure par électro-fusion des matières constitutives d'une partie au moins de ladite partie terminale du manchon et respectivement une partie terminale de dit chemisage en contact l'une avec l'autre, et parcourues par ledit fil chauffant, et
i.5) on dégonfle lesdites première et deuxième chambres gonflables, et on déplace en translation ledit dispositif de mise en place de manchon de sorte que ledit dispositif de contrôle de soudure sont disposé en vis à vis de ladite partie terminale de manchon correspondant à ladite zone de soudure par électro-fusion, et
i.6) on gonfle à nouveau les deux première et deuxième chambres gonflables qui viennent se plaquer et solidariser contre la paroi interne du manchon, et on actionne ledit dispositif de contrôle de soudure pour contrôler ladite soudure, de préférence en réalisant de l'injection d'eau sur ladite partie terminale du manchon, et
i.7) on dégonfle lesdites première et deuxième chambres et on déplace en translation ledit dispositif de mise en place de manchon pour l'évacuer.

On comprend que ledit élément de conduite obtenu se retrouve avec une partie de manchon du côté de la deuxième partie terminale libre à l'extérieur de l'élément de conduite correspondant à ladite extrémité mâle de l'étape a) du procédé de réalisation de conduite ci-après.

A l'étape i.6), l'eau permet d'assurer une meilleure transmission des ondes ultrason au plastique à inspecter.

La présente invention fournit également un procédé de réalisation d'une conduite à l'aide d'un dispositif de mise en place de manchon selon l'invention, dans lequel on réalise l'assemblage d'éléments unitaires de conduite comprenant un dit chemisage, de préférence avec une partie terminale d'épaisseur réduite à chaque extrémité, et un dit manchon tubulaire de jonction inséré et fixé à seulement une extrémité de chaque dit élément de conduite et dépassant de celle-ci, le dépassement dudit manchon définissant une extrémité mâle de chaque dit élément de conduite apte à être assemblée avec une extrémité dépourvue de dit manchon définissant une extrémité femelle d'un autre dit élément de conduite, ledit manchon présentant à chaque extrémité une partie terminale de paroi tubulaire, de préférence d'épaisseur réduite par rapport à l'épaisseur de la partie courante adjacente de la paroi tubulaire dudit manchon, ledit manchon présentant à au moins une, de préférence à chacune, desdites parties terminales du manchon un fil chauffant par effet Joule disposé, de préférence en spirale, en surface externe de ladite partie terminale dudit manchon apte à créer par chauffage une zone de contact étanche par fusion entre elles des matières constitutives d'une partie au moins de ladite partie terminale du manchon et respectivement une partie terminale de dit chemisage en contact l'une avec l'autre, et parcourues par ledit fil chauffant, en réalisant les étapes suivantes dans lesquelles :
a) on introduit un dispositif de mise en place de manchon à l'intérieur d'un dit élément unitaire de conduite de sorte que ladite première chambre gonflable soit disposée avec son premier connecteur électrique en vis-à-vis de l'extrémité d'un fil chauffant au niveau d'une partie terminale dudit manchon qui lui est fixé, et on fixe ledit dispositif de mise en place de manchon à l'intérieur dudit manchon par gonflage d'une dite deuxième chambre gonflable contre la paroi interne dudit manchon, et
b) avant ou après l'étape a), on introduit et insère en force la partie de manchon formant ladite extrémité mâle d'un élément de conduite dans l'extrémité femelle de l'autre élément de conduite, dans la direction longitudinale (XX') axialement, jusqu'à ce que ladite partie terminale du manchon de la ladite extrémité mâle dudit élément de conduite terminal soit en contact avec ladite partie terminale du chemisage de ladite extrémité femelle dudit élément de conduite à assembler, et
c) on réalise le soudage périphérique externe des extrémités des deux éléments de conduite bout à bout, et
d) on réalise le gonflage d'une dite première chambre gonflable et on relie son dit premier connecteur électrique à l'extrémité du fil chauffant au niveau de ladite partie terminale du manchon qui lui est en vis à vis, et on alimente ledit fil chauffant en électricité, en exerçant simultanément une pression de ladite partie terminale de manchon contre ladite partie terminale de chemisage en contact l'une avec l'autre pour réaliser une dite zone de soudure par électro-fusion au niveau d'une partie au moins de l'interface des surfaces de chaque dite partie terminale du manchon et chaque dite partie terminale de chemisage en contact l'une avec l'autre et parcourues par le fil chauffant à la surface du manchon, pour réaliser une dite zone de contact étanche par fusion, et
e) on dégonfle lesdites première et deuxième chambres gonflables et on déplace en translation ledit dispositif de mise en place de manchon.

Plus particulièrement, on réalise les étapes suivantes dans lesquelles :
a.1) on descend dans une tour de pose de conduite d'un navire de pose un premier élément de conduite équipé d'un dit manchon à une de ses extrémités, jusqu'à proximité de l'extrémité de l'élément de conduite terminal supérieur de la conduite en cours d'assemblage partiellement immergée en bas de la tour, et
a.2) on descend un dit dispositif de mise en place de manchon (20) avec lesdites première et deuxième chambres au moins partiellement dégonflées, que l'on solidarise à un dit manchon fixé à un desdits premier ou deuxième élément de conduite, par gonflage d'une dite deuxième chambre que l'on plaque contre la paroi interne du manchon dans sa partie courante, ladite première chambre étant disposée en vis-à-vis d'une partie terminale libre dudit manchon avec son premier connecteur en vis-à-vis d'une extrémité de dit fil chauffant,
a.3) on gonfle la première chambre qui se plaque contre la partie terminale dudit manchon telle que ledit connecteur électrique soit branché, de préférence via un connecteur électrique complémentaire, à une extrémité dudit fil chauffant, et
b) après ou avant l'étape a.3), on réalise l'assemblage des deux éléments de conduite en introduisant et insérant en force la partie d'un manchon formant une dite extrémité mâle d'un élément de conduite dans l'extrémité femelle dépourvue de manchon de l'autre élément de conduite,
c) on réalise ledit soudage des extrémités des deux éléments de conduite bout à bout, et
d.1) on alimente ledit fil chauffant en électricité, en exerçant simultanément une pression de ladite partie terminale de manchon contre ladite partie terminale de chemisage en contact l'une avec l'autre par gonflage de ladite première chambre pour réaliser une dite zone de soudure par électro-fusion, et
d.2) on dégonfle lesdites première et deuxième chambres, et on déplace en translation ledit mandrin de sorte que lesdits moyens de contrôle de soudure soient disposés en vis à vis de ladite partie terminale de manchon électro-soudée, et
d.3) on gonfle les deux première et deuxième chambre qui viennent se plaquer et solidariser contre la paroi interne du manchon, et
d.4) on actionne lesdits moyens de contrôle de soudure pour contrôler ladite soudure, de préférence en réalisant simultanément de l'injection d'eau sur ladite partie terminale du manchon.

Plus particulièrement encore, à l'étape d.4), on réalise les opérations suivantes dans lesquelles :
d.4.1) on actionne en fermeture lesdits moyens d'obturation de sorte qu'on forme un compartiment étanche délimité par ladite première chambre gonflable et lesdits moyens d'obturation fermant le passage à l'intérieur de la conduite, compartiment étanche au sein duquel sont disposés lesdits moyens de contrôle de soudure pour contrôler ladite soudure, et
d.4.2) on remplit d'eau ledit compartiment étanche et actionne lesdits moyens de contrôle de soudure pour contrôler ladite soudure, et
d.4.3) ensuite, on actionne en ouverture lesdits moyens d'obturation réversibles.

Plus particulièrement encore, avant l'étape a), on réalise les étapes i.1) à i.7) du procédé de mise en place d'un manchon tubulaire de jonction au niveau d'une extrémité d'un élément unitaire de conduite selon l'invention, de préférence sur le pont du navire ou à terre, pour fixer un dit manchon en partie terminale d'un dit élément de conduite avant son assemblage avec un autre dit élément de conduite.

On entend ici par « interne » et « externe », interne et respectivement externe à la conduite, au manchon ou au chemisage selon les cas.

On comprend qu'on entend ici par « partie courante du manchon » la partie centrale du manchon située entre les deux parties terminales aux deux extrémités longitudinales du manchon.

Comme explicité ci-après, lesdites parties terminales du manchon du chemisage peuvent être en contact l'une avec l'autre, au niveau de surfaces de révolution externes desdites parties terminales du manchon en contact avec des surfaces de révolution internes desdits chemisages ou au niveau des surfaces annulaires planes des extrémités frontales à section droite desdites parties terminales du manchon et dudit chemisage. Lesdites surfaces de révolution desdites parties terminales du manchon et de chemisage présentent le même axe de révolution que ladite conduite.

Ladite zone de contact étanche s'étend sur tout le pourtour des surfaces de révolution externes desdites parties terminales du manchon et desdites surfaces de révolution internes desdites parties terminales du chemisage en contact l'une avec l'autre, c'est-à-dire sur 360° autour de leur axe de révolution XX'. En revanche, ladite zone de contact étanche peut s'étendre sur une partie simplement des longueurs dans la direction axiale desdites surfaces de révolution des parties terminales de manchon et chemisage en contact l'une avec l'autre.

On comprend que lesdites surfaces de révolution desdites parties terminales du manchon et du chemisage présentent le même axe de révolution que ladite conduite et que ledit manchon en position à l'intérieur de ladite conduite.

De façon connue, chaque dit élément de conduite comprend un chemisage interne en matériau plastique, de préférence thermoplastique, se terminant à une certaine distance l de l'extrémité dudit élément de conduite, de préférence une partie au moins de la surface externe de chaque partie terminale aux extrémités du chemisage interne pouvant être verrouillée par collage contre la surface interne correspondante de la paroi en acier de la conduite, à l'aide d'une colle de préférence du type époxy ou polyuréthane.

De façon connue encore, le manchon s'étend dans une direction longitudinale axiale XX' et de la conduite sur une longueur recouvrant au moins les longueurs de conduite non recouvertes de dits chemisages, c'est-à-dire au moins 2 fois ladite distance l.

On comprend que la surface externe de la partie courante du manchon adjacente à ladite partie terminale de manchon est située en vis-à-vis des parties des parois internes des extrémités desdits éléments de conduite assemblées non recouvertes de dit chemisage.

On comprend que les parties terminales aux extrémités du manchon présentent des surfaces de formes identiques ou complémentaires aux surfaces des parties terminales aux extrémités desdits chemisages avec lesquelles elles sont en contact.

Selon une première variante de réalisation, la paroi du manchon au niveau d'au moins une dite partie terminale du manchon est sensiblement de même épaisseur que celle de la partie courante adjacente du manchon en vis-à-vis de la conduite non chemisée, et sensiblement de même épaisseur que celle d'une dite partie terminale dudit chemisage et que celle de la partie courante adjacente dudit chemisage, ladite zone de soudure par fusion étant située au niveau des extrémités frontales droites du manchon et dit chemisage en butée l'une contre l'autre.

On comprend que dites extrémités frontales droites forment des surfaces planes annulaires s'étendant dans une direction perpendiculaire à la direction longitudinale XX' du manchon et de la conduite et sont constituées par la tranche en section transversale droite desdites extrémités.

Dans ce mode de réalisation, la spirale formée par le fil chauffant est plane, et celle-ci progresse autour de ladite surface frontale ou tranche de l'extrémité du manchon de telle sorte que le diamètre de ses spires concentriques situées toute dans un même plan, augmente depuis sa dite première extrémité qui est la plus proche de la surface interne du manchon vers sa dite deuxième extrémité la plus proche de la surface externe adjacente du manchon située en vis-à-vis de la paroi interne de la conduite.

Dans une deuxième variante de réalisation plus particulièrement avantageuse pour des épaisseurs réduites, notamment inférieures à 10 mm, ledit chemisage interne présente à au moins une extrémité une partie terminale d'épaisseur réduite par rapport à l'épaisseur de la partie courante dudit chemisage, définissant une forme concave avec une surface interne de révolution de diamètre interne plus grand que celui de la partie courante dudit chemisage, et ledit manchon présente à au moins une extrémité une partie terminale d'épaisseur réduite par rapport à l'épaisseur de la partie courante adjacente dudit manchon, ladite partie terminale du manchon définissant une forme convexe apte à chevaucher la partie terminale concave d'épaisseur réduite dudit chemisage avec laquelle elle est en contact, ladite partie terminale du manchon définissant une surface externe de révolution de diamètre externe inférieur à celui de la partie courante adjacente du manchon et une surface interne cylindrique sensiblement de même diamètre interne que celui desdites partie courante du chemisage et partie courante du manchon, ledit fil chauffant par effet Joule parcourant toute la périphérie de ladite surface externe de révolution autour de son axe de révolution (XX') et une partie au moins de la longueur de ladite partie terminale dans la direction dudit axe de révolution (XX').

On comprend que de par leurs formes complémentaires, lesdites partie terminale du manchon et partie terminale d'épaisseur réduite du chemisage permettent l'insertion du manchon contre la surface interne de la partie terminale d'épaisseur réduite du chemisage par simple encastrement en force dudit manchon dans la direction longitudinale axiale XX' à l'intérieur dudit élément de conduit et la surface externe de dite partie terminale d'épaisseur réduite de manchon en contact avec la surface interne de partie terminale d'épaisseur réduite de chemise présentent une forme identique et sont disposées l'une par rapport à l'autre pour épouser leur contour identique.

Dans une première sous-variante de cette deuxième variante, lesdites surface interne de la partie terminale d'épaisseur réduite du chemisage et surface externe de la partie terminale d'épaisseur réduite du manchon recouverte dudit fil chauffant, en contact l'une contre l'autre sont de même forme tronconique de même axe XX' que les dit manchon et dite conduite.

On comprend que de par leurs formes concave et respectivement convexe complémentaires, lesdites surface interne et surface externe tronconiques présentent un angle au sommet sensiblement de même valeur. Dans ce mode de réalisation à surface de contact tronconique, lesdites parties terminales d'épaisseur réduite du manchon et du chemisage en contact présentent une épaisseur augmentant depuis les extrémités du manchon et respectivement du chemisage, vers la partie courante adjacente du manchon et respectivement du chemisage, et la spirale du fil chauffant progresse avec des spires augmentant de diamètre depuis sa dite première extrémité située du côté de la partie terminale du manchon de plus petite épaisseur vers sa dite deuxième extrémité située du côté de la partie terminale du manchon de plus grande épaisseur.

Dans une deuxième sous-variante de cette deuxième variante, lesdites surface interne de la partie terminale d'épaisseur réduite du chemisage et surface externe de la partie terminale d'épaisseur réduite du manchon, en contact l'une contre l'autre sont de même forme cylindrique de même axe XX' que les dit manchon et dite conduite, de préférence l'extrémité de la partie terminale d'épaisseur réduite du manchon recouverte dudit fil chauffant venant buter contre un épaulement délimitant les surfaces internes desdites partie courante et partie terminale d'épaisseur réduite du chemisage.

Dans ce mode de réalisation à surface de contact cylindrique, lesdites parties terminales d'épaisseur réduite du manchon et du chemisage en contact présentent une épaisseur de préférence identique sensiblement constante, et la double spirale du fil chauffant progresse des spires de diamètre constant depuis sa dite première extrémité située du côté de la partie terminale du manchon de plus petite épaisseur vers sa dite deuxième extrémité située du côté de la partie terminale du manchon de plus grande épaisseur.

Lorsque la surface interne de la partie terminale d'épaisseur réduite du manchon est conique ou cylindrique, la double spirale formée par le fil chauffant est tridimensionnelle c'est-à-dire de forme hélicoïdale car ses spires sont espacées dans la direction longitudinale du manchon.

Dans les différents modes de réalisation ci-dessus dits à surface de contact des parties terminales du manchon et chemise frontale, conique ou cylindrique, la surface de contact présente une topologie de type cône dont le demi angle au sommet α est compris entre 0 et 90° pour les surface conique, et de type cône fictif avec un demi angle au sommet α = 90° pour les extrémités frontales à section droite, et α = 0° pour les surfaces cylindriques, de sorte que dans tous les cas ladite première extrémité de spirale est située du côté de la pointe du cône ou du cône fictif.

De préférence, comme décrit dans WO 2012/017171, on met en œuvre un fil chauffant enroulé en double spirale, les deux extrémités libres (non spiralées) du fil étant situées du même côté de la double spirale, pour rejoindre la surface interne du manchon au plus près de ladite surface interne. Ainsi, dans le cas où le fil est mis en œuvre sur une surface externe de révolution, il est possible de mettre en œuvre un fil chauffant dont les deux extrémités libres sont situées du même côté de la zone d'électro-fusion, à savoir le côté opposé par rapport à ladite soudure métallique. Ainsi, un fluide sous pression ne pourra pas accéder à ladite soudure métallique en cheminant à travers l'épaisseur du manchon jusqu'à la zone de fusion, mais pourra uniquement cheminer dans l'interface entre la zone de contact étanche ou zone de fusion et l'intérieur de la conduite.

Le mode de réalisation avec un fil chauffant enroulé en double spirale est avantageux en ce qu'il permet d'assurer une étanchéité plus complète et plus fiable de la surface de contact entre lesdites parties terminales du manchon et du chemisage afin d'éviter tout risque de contact de ladite soudure avec l'eau lorsque ladite conduite véhicule de l'eau et ainsi éviter tout risque d'envahissement de la zone située entre la surface externe du manchon et la surface interne desdits éléments de conduite, ce qui ne manquerait pas de créer un rétrécissement du diamètre interne du manchon, c'est-à-dire de la section de passage du fluide, et donc des perturbations dans l'écoulement du fluide à l'intérieur du manchon, sans compter le risque de contact de ladite soudure avec l'eau, lorsque ladite conduite véhicule de l'eau.

En effet, du fait que les deux extrémités libres non spiralées du fil partent de la première extrémité de la double spirale du côté de la partie de l'interface non étanche débouchant uniquement sur la surface interne du manchon, un fluide sous pression, ne pourra pas cheminer à travers l'épaisseur du manchon jusqu'à la deuxième extrémité et ne pourra pas accéder à ladite soudure, mais pourra uniquement cheminer dans l'interface et dans les canaux des extrémités du fil entre lesdites premières extrémités de la double spirale et l'intérieur de la conduite.

Plus particulièrement, la conduite à réaliser est une conduite de liaison soit reposant sur le fond de la mer, soit une liaison fond/surface apte à être posée en milieu sous-marin à grande profondeur, de préférence jusqu'à 3000 m, et lesdits éléments de conduite ont une longueur de 20 à 50 m, de diamètre interne de 10 à 60cm et ledit manchon présente une longueur de 45 à 150cm. Il s'agit plus particulièrement de conduite d'injection d'eau sous pression dans des puits de champs pétroliers, laquelle pression est toujours supérieure à 5MPa et plus particulièrement de 25 à 70 MPa (250 à 700 bars). Ce type de conduite comme rappelé ci-dessus est particulièrement sollicitée au niveau desdites soudures de sorte que celles-ci doivent être protégées au maximum de toute corrosion par contact avec l'eau de mer, surtout dans le cas de liaisons fond-surface, car dans ce cas la conduite est perpétuellement en mouvements en raison des effets de la houle du vent et du courant s'exerçant sur le support flottant en surface et de ce fait soumise à des contraintes de fatigue extrêmes. De plus, les propriétés du fluide véhiculé, peuvent amener à devoir inclure des surépaisseurs d'acier sacrificiel important, ayant un impact fort sur l'installation de ces conduites. La mise en place d'un chemisage en plastique permet de supprimer ce besoin.

Selon un mode de réalisation, ledit manchon est réalisé par assemblage par soudage par fusion, de préférence par électro-fusion, des surfaces des extrémités en contact l'une avec l'autre d'au moins 2 parties tubulaires de dit manchon comprenant au moins :
- une première partie tubulaire de manchon comprenant une partie courante de manchon et une partie centrale de manchon de diamètre externe et de préférence de diamètre interne, de dimension(s) réduite(s) par rapport au diamètre externe, et de préférence respectivement diamètre interne, de la partie courante adjacente, de préférence encore ladite première partie tubulaire de manchon étant obtenue par usinage d'un manchon tubulaire de plus grande épaisseur, et
- au moins une deuxième partie tubulaire de manchon comprenant partie terminale tubulaire de manchon présentant de préférence une plus petite longueur que ladite première partie tubulaire dans la direction axiale XX' du manchon, et de préférence présentant une surface interne cylindrique, et de préférence encore, ladite deuxième partie de manchon étant obtenue par moulage, et
- les extrémités de deux dites première et deuxième parties tubulaires de manchon assemblées présentent des formes identiques ou complémentaires au niveau de leur zone de contact, dont une desdites surfaces au moins est recouverte d'un dit fil chauffant par effet Joule, et dont les bornes d'extrémité débouchent de préférence encore sur la surface interne de ladite partie tubulaire de manchon.

Ce mode de réalisation comprenant plusieurs parties tubulaires de manchon permet de limiter la réalisation des pièces moulées à des pièces relativement de plus petite dimension, ce qui permet d'éviter de mettre en œuvre des moules extrêmement coûteux de grande dimension.

Lesdites formes complémentaires concave et convexe des deux parties tubulaires de manchon assemblées par électro-fusion peuvent, comme pour les parties terminales de manchon et de chemisage, présenter des surfaces identiques de forme :
- coniques ou cylindriques pour des extrémités de dites parties tubulaires de manchon d'épaisseur réduite, ou:
- annulaire plane dite frontale, les parties tubulaires de manchon étant assemblées par leur tranches s'étendant dans un plan perpendiculaire à ladite direction longitudinale XX' du manchon.

Ledit manchon peut être constitué de l'assemblage par soudage par électro-fusion d'une dite première partie tubulaire de manchon assemblée à chaque extrémité à une dite deuxième première partie tubulaire de manchon, chaque dite deuxième partie tubulaire de manchon comportant une extrémité libre comprenant une dite partie terminale de manchon.

Dans un mode de réalisation avec un assemblage particulièrement fiable mécaniquement, ladite première partie tubulaire de manchon et ladite deuxième partie tubulaire de manchon présentent à leurs extrémités assemblées des formes complémentaires respectivement concave et respectivement convexe, la surface interne conique de ladite première partie tubulaire de manchon ou ladite surface externe conique de ladite deuxième partie tubulaire de manchon étant recouverte d'un dit fil chauffant en spirale. Ce mode de réalisation est plus particulièrement avantageux et pour réaliser un dit assemblage par électro-fusion des deux dites premières et deuxième partie tubulaire de manchon in situ en introduisant tout d'abord ladite deuxième partie tubulaire de manchon que l'on assemble par électro-fusion avec une partie terminale de chemise interne d'un élément de conduite, puis en assemblant ladite première partie tubulaire de manchon et dite deuxième partie tubulaire de manchon. En effet, dans ce cas l'extrémité biseautée à assembler de ladite première partie tubulaire de manchon vient se caler comme un coin dans l'espace angulaire aigu, avec la surface interne conique concave calée en butée contre la surface externe convexe conique de l'extrémité de ladite deuxième partie tubulaire du manchon.

De préférence, ledit manchon présente dans une partie centrale, un diamètre externe inférieur aux diamètres externes des parties courantes adjacentes à ladite partie centrale de manière à ménager un espace annulaire entre le manchon et la paroi desdits éléments de conduite, et on place, si besoin, une pièce annulaire de protection thermique apte à protéger le manchon lors du soudage des extrémités des éléments de conduite, lesdites parties courantes du manchon présentant de préférence un diamètre externe sensiblement identique au diamètre interne des extrémités non recouvertes dudit chemisage des éléments de conduite assemblées.

Ce mode de réalisation est particulièrement avantageux en ce qu'il permet de créer un espace annulaire de taille suffisante pour accueillir une dite pièce annulaire de protection thermique du manchon, laquelle empêchera la détérioration du manchon lors de la réalisation du soudage des extrémités en acier desdits éléments de conduite à assembler, protégeant ainsi le manchon sur sa surface externe en vis-à-vis desdites extrémités des éléments de conduite à souder entre elles.

De préférence encore, la paroi tubulaire dudit manchon présente une épaisseur sensiblement constante, dans ses dites parties courantes adjacentes, et sensiblement égale à l'épaisseur de la partie courante dudit chemisage interne, et ladite partie centrale du manchon, de préférence d'épaisseur réduite, est apte à se déformer pour adopter un diamètre interne sensiblement identique au diamètre interne du reste du manchon sous l'effet d'une pression interne du fluide circulant à l'intérieur de la conduite en opération d'au moins 1 MPa, et la pièce de protection thermique est elle-même aussi déformable dans les mêmes conditions de pression de préférence pour adopter une épaisseur inférieure à 5mm de préférence encore inférieure à 2mm, ladite pièce de protection thermique étant de préférence encore constituée de fibres de céramique.

Des procédés de réalisation d'éléments de chemisage interne d'éléments de conduite d'une part et d'assemblage des éléments de conduite vêtus d'un chemisage interne à l'aide d'un manchon tubulaire sont décrits dans WO 2006/042925 et trouveront à s'appliquer selon la présente invention, en particulier, on peut réaliser le chemisage interne avec un procédé comprenant les étapes suivantes comprenant :
1- ledit chemisage interne en introduisant, par une première extrémité d'un élément de conduite, une conduite en matériau thermoplastique souple et élastique en forme de conduite à section circulaire ou pliée en forme de haricot, destinée à former ladite chemise, et en la tirant à l'intérieur dudit élément de conduite jusqu'à la seconde extrémité de l'élément de conduite, puis on relâche la traction pour permettre son expansion radiale et son collage contre la surface interne de la paroi dudit élément de conduite, et
2- le découpage et l'usinage des extrémités de ladite conduite de chemisage de façon à former desdites parties terminales d'épaisseur réduite de ladite chemise interne et une partie terminale non chemisée de la paroi en acier dudit élément de conduite à chacune de ses extrémités.

D'autres caractéristiques et avantages de la présente invention apparaîtront à la lumière de la description détaillée qui va suivre, en référence aux figures suivantes dans lesquelles :

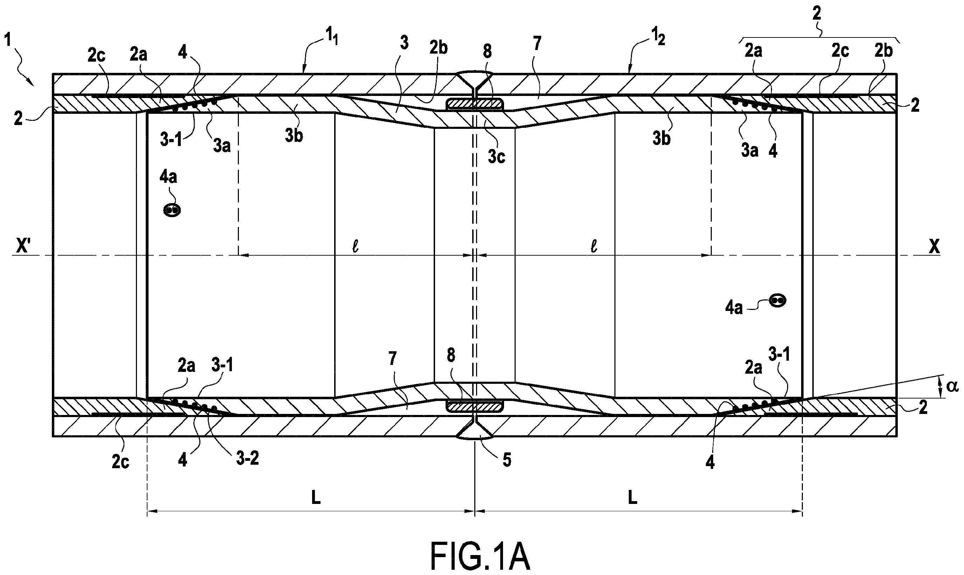

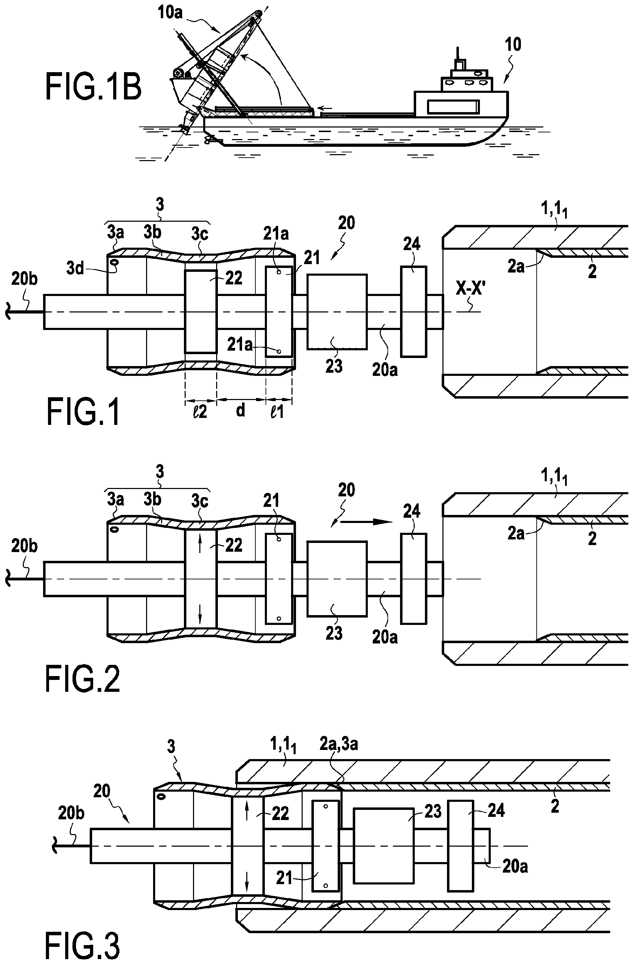

- la figure 1A est une coupe en vue de côté de l'assemblage d'une conduite selon l'invention, à l'aide d'un manchon tubulaire de jonction entre deux éléments de conduite ou longueurs unitaires de conduites chemisées selon l'invention,
- la figure 1B représente en vue de côté un navire d'installation équipé d'une tour de pose dite en "J",
- Les figures 1 à 9 représentent différentes étapes de mise en place et soudure du manchon 3 à une extrémité d'un élément de conduite avec un dispositif selon la présente invention représenté schématiquement,
- Les figures 10 à 21 représentent différentes étapes d'assemblage de deux éléments de conduite avec mise en place et soudure du manchon 3 à une extrémité d'un premier élément de conduite au niveau de l'extrémité dépourvue de manchon d'un deuxième élément de conduite avec un dispositif selon la présente invention représenté schématiquement ;
- Les figures 22 et 23 montrent un dispositif 20 de mise en place de manchon qui comprend deux chambres aptes à réaliser l' électro-fusion.

Sur la figure 1A, on a représenté une conduite 1 selon l'invention comprenant au moins 2 éléments de conduite 1₁, 1₂ à chemisage interne 2 en polyéthylène ou polypropylène assemblés bout à bout, dans laquelle les extrémités des deux éléments de conduite sont soudées 5 l'une à l'autre. Chaque élément de conduite comprend un chemisage interne en matériau thermoplastique 2 d'axe XX' coïncidant sensiblement avec l'axe des éléments de conduite 1₁, 1₂, présentant à chaque extrémité une partie terminale conique de demi-angle au sommet α 2a d'épaisseur réduite par rapport à l'épaisseur de la partie courante 2b dudit chemisage, définissant une surface interne de révolution de diamètre interne plus grand que celui de la partie courante 2b dudit chemisage et se terminant à une certaine distance L de chaque extrémité dudit élément de conduite. La surface externe de chaque dite partie terminale 2a du chemisage interne est éventuellement verrouillée par collage 2c de l'extrémité du chemisage au niveau ou à proximité de ladite partie terminale d'épaisseur réduite 2a du chemisage contre la surface interne correspondante de la paroi en acier de la conduite, à l'aide d'une colle, de préférence de type polyuréthanne ou époxy bi-composants.

Un manchon tubulaire de jonction 3 en matériau thermoplastique, de préférence identique au matériau thermoplastique du chemisage interne 2, d'axe XX' coïncidant sensiblement avec l'axe des éléments de conduite 1₁, 1₂, de même diamètre externe, juste légèrement inférieur au diamètre interne de la conduite, est inséré à l'intérieur de chacune des extrémités bout à bout des deux éléments de conduite, de manière à chevaucher lesdites parties terminales des deux chemisages 2a, 2b à l'aide d'un dispositif 20 selon l'invention comme décrit ci-après en référence aux figures 1 à 9.

Plus précisément, sur la figure 1A le chemisage interne 2 présente à chaque extrémité de l'élément de conduite une partie terminale d'épaisseur réduite 2a par rapport à l'épaisseur de la partie courante 2b dudit chemisage, définissant une forme concave avec une surface interne tronconique de demi-angle au sommet α, de diamètre interne plus grand que celui de la partie courante 2b dudit chemisage, et, ledit manchon 3 présente à chaque extrémité longitudinale une partie terminale 3a d'épaisseur réduite par rapport à l'épaisseur de la partie courante adjacente 3b dudit manchon, ladite partie terminale 3a du manchon définissant une forme convexe apte à chevaucher la partie terminale d'épaisseur réduite dudit chemisage 2a avec laquelle elle est en contact, ladite partie terminale 3a du manchon définissant une surface externe tronconique 3-2 de diamètre externe inférieur à celui de la partie courante adjacente 3b du manchon, de même angle au sommet α que ladite surface interne tronconique de ladite partie terminale concave dudit chemisage. Les parties terminales du manchon de forme conique définissent une surface interne 3-1 cylindrique sensiblement de même diamètre interne que celui desdites partie courante 2b du chemisage et partie courante 3b du manchon.

Sur la figure 1A, le manchon présente dans une partie centrale 3c, c'est-à-dire environ à mi- longueur dans sa direction longitudinale axiale XX', un diamètre externe réduit inférieur aux diamètres externes de ses parties courantes 3b adjacentes à ladite partie centrale 3c de manière à ménager un espace annulaire 7, et on place une pièce annulaire 8 de protection thermique du manchon lors du soudage des extrémités des éléments de conduite, lesdites parties courantes 3b du manchon présentant un diamètre externe sensiblement identique au diamètre interne des extrémités non recouvertes dudit chemisage des éléments de conduite assemblées.

La paroi tubulaire dudit manchon présente une épaisseur sensiblement constante dans sa partie centrale 3c et ses parties courantes adjacentes 3b, et sensiblement égale à l'épaisseur de la partie courante 2b dudit chemisage interne 2, et ladite partie centrale 3c du manchon est apte à se déformer pour adopter un diamètre interne sensiblement identique au diamètre interne du reste du manchon sous l'effet d'une pression interne du fluide circulant à l'intérieur de la conduite en opération d'au moins 1 MPa, et la pièce de protection thermique 8 est elle-même aussi déformable dans les mêmes conditions de pression interne à l'intérieur de la conduite pour adopter une épaisseur réduite, de préférence une épaisseur inférieure à 5mm, de préférence encore inférieure à 2mm, ladite pièce de protection thermique étant de préférence encore constituée de fibres de céramique sous une forme similaire à du coton hydrophile.

On comprend que :
- la partie centrale du manchon du fait de son épaisseur sensiblement constante, présente une réduction du diamètre externe ainsi que du diamètre interne lors de la pose, la conduite étant vide et à la pression atmosphérique et lorsqu'elle est soumise à des pressions correspondant à des valeurs de pression inférieures à 1 MPa (10 bars),
- dès que la pression interne excède 1 MPa (10 bars), les épaisseurs notamment de l'ordre de 5 à 20mm et la rigidité du matériau plastique tel que du polyéthylène ou polypropylène permettent une augmentation des diamètres interne et externe de la partie centrale par déformation, par exemple lorsque circule à l'intérieur de la conduite et du manchon un fluide, notamment de l'eau sous pression, comme c'est le cas dans les conduites d'injection d'eau pour puits pétroliers supérieure à 5 MPa, notamment de 25 à 70 MPa.

Du fait que la pression P₀ à l'extérieur de la chemise est très inférieure à la pression interne Pmax, cette dernière a pour effet de plaquer de manière énergique la partie centrale rétreinte 3c du manchon tubulaire de jonction 3 contre la paroi de la conduite acier, l'écran 8 en fibre céramique étant lui aussi écrasé et ne présentant alors qu'une épaisseur résiduelle de pas plus de 1 à 2mm.

Le manchon 3 présente une partie centrale 3c de diamètre externe réduit qui reviendra se plaquer à l'intérieur de la conduite dès lors que la pression interne dépasse 1 à 1.5 MPa (10 à 15 bars) grâce à la souplesse du matériau thermoplastique. Pour améliorer la déformabilité de cette partie centrale 3c et des zones de transition adjacentes, on réduira avantageusement l'épaisseur de ces zones par rapport à l'épaisseur de la partie courante 3b du manchon, d'une proportion de 5 à 50%. De même, cette zone centrale 3c ainsi que les zones de transitions ont été représentées pour la clarté des dessins avec des raccordements à angle vif, mais on préfèrera des congés de raccordement à grand rayon de courbure, de manière à éviter l'apparition d'amorces de ruptures par fissuration dans ces zones.

Sur la figure 1A, on a représenté un fil chauffant 4 formant une spirale, de préférence une double spirale formées de deux parties de fil disposées côte à côte formant deux spirales sensiblement équidistantes se rejoignant à une extrémité commune constituée par une boucle en épingle à cheveux comme décrit dans WO 2012017171. Chaque spirale parcoure ladite surface externe 3-2 de chaque dite partie terminale du manchon. Les deux extrémités libres du fil comportent une borne d'alimentation électrique réunies côte à côte au niveau d'un connecteur électrique commun 4a au niveau de la surface interne 3-1 du manchon.

Sur les figures 1 à 9, on représente les différentes étapes de mise en place d'un manchon tubulaire de jonction 3 au niveau d'une extrémité d'un élément de conduite 1₁ à l'aide d'un dispositif 20 de mise en place de manchon. Ces opérations peuvent être effectuées à terre ou sur le pont du navire en position horizontale.

Un dispositif 20 de mise en place de manchon 3 selon l'invention est équipé sur les figures 1 à 9 d'un mandrin 20a de forme cylindrique s'étendant dans une direction longitudinale axiale XX' comprenant un orifice central cylindrique longitudinal au sein duquel est disposé un ombilical 20b lequel sert aussi de fil de manutention du dispositif 20.

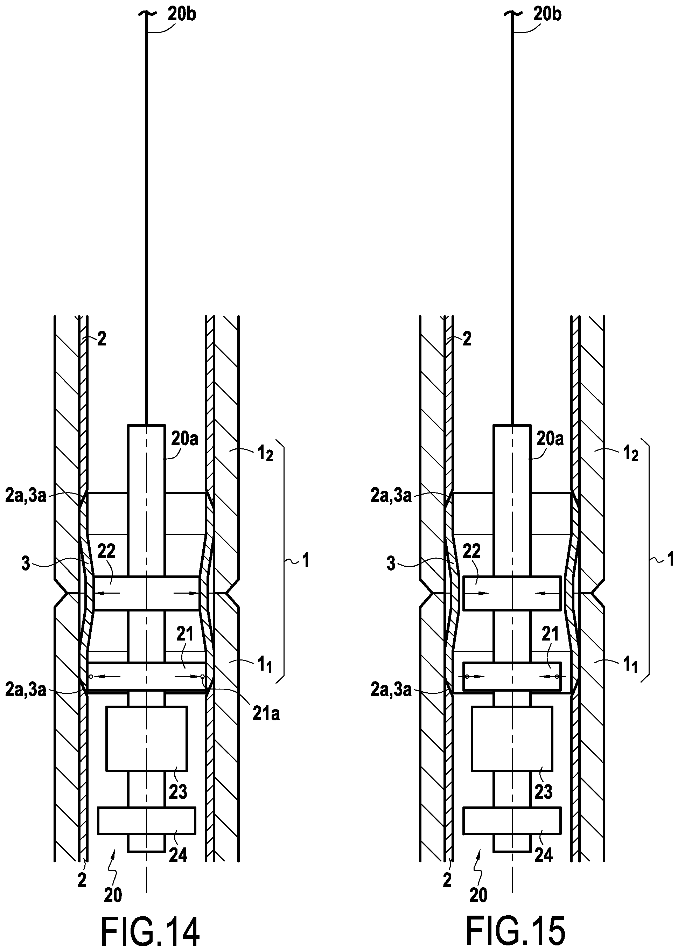

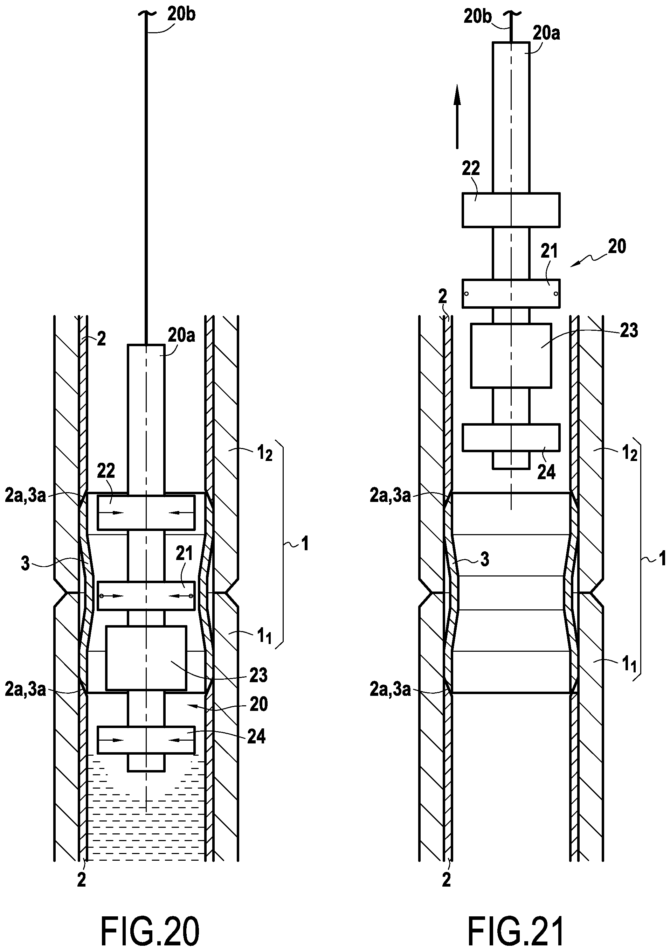

Sur les figures 1 à 21, le dispositif 20 comprend une première chambre gonflable 21 équipée de connecteurs électriques 21a, disposée dans la direction longitudinale XX' à une distance d d'une deuxième chambre gonflable 22. La première chambre 21 est intercalée dans la direction longitudinale entre d'une part, la deuxième chambre 22 et d'autre part le dispositif de contrôle de soudure 23 également supporté par le mandrin 20a. Le mandrin 20a supporte en outre, une troisième chambre gonflable formant une paroi extensible 24 disposée dans la direction XX' de sorte que les moyens de contrôle de soudure 23 sont intercalés entre la première chambre gonflable 21 et la troisième chambre gonflable 24.

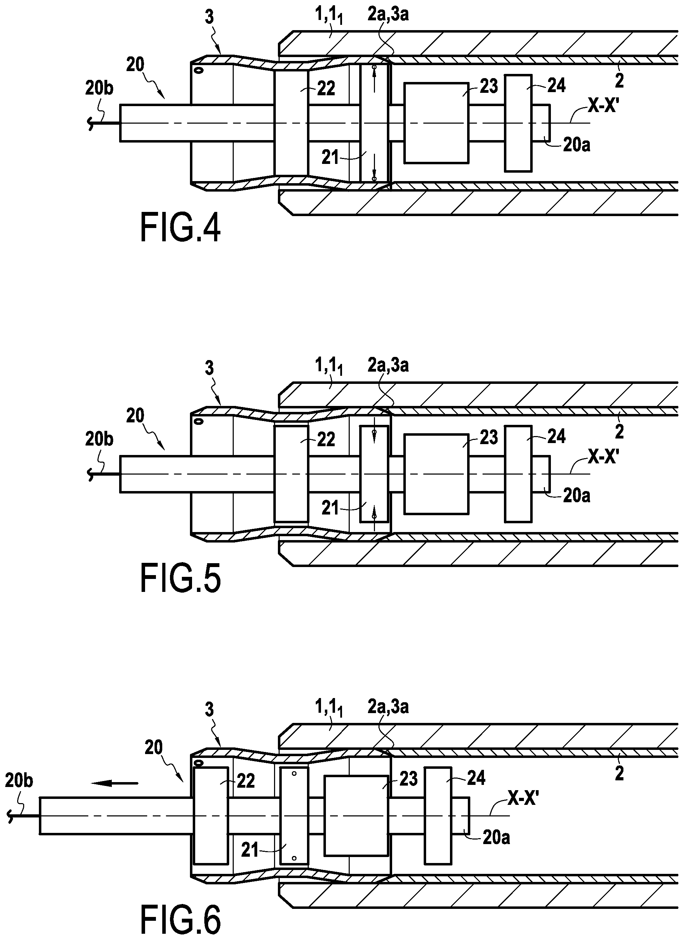

Les première et deuxième chambres sont espacées d'une distance d de telle sorte que lorsque la deuxième chambre 22 est disposée en vis-à-vis de la partie centrale restreinte 3c du manchon, la première chambre 21 est disposée en vis-à-vis d'une extrémité du manchon au niveau de sa partie terminale d'épaisseur réduite 3a. Le dispositif de contrôle de soudure 23 est alors situé à l'extérieur du manchon. Le dispositif de contrôle de soudure 23 est disposé dans la direction longitudinale de telle sorte que lorsque l'on dispose la deuxième chambre 22, en vis-à-vis de l'extrémité opposée du manchon comme représenté à la figure 6, le dispositif de contrôle de soudure 23 est disposé en vis-à-vis de la première extrémité du manchon, et est ainsi apte à contrôler la soudure par électro-fusion de cette première extrémité 3a du manchon avec une extrémité de chemise d'un élément de conduite dans lequel le manchon 3 a été inséré et soudé, comme décrit ci-après.

Ainsi, les extrémités les plus éloignées dans la direction longitudinale de ladite deuxième chambre 22 et dudit dispositif de contrôle de soudure 23 sont sensiblement à même distance que la longueur L du manchon, les trois éléments 21, 22 et 23 étant aptes à être inclus à l'intérieur dudit manchon.

Sur la figure 1, on a inséré un dispositif de mise en place du manchon 20 selon la présente invention de telle sorte que comme représenté sur la figure, lorsque l'on gonfle au maximum, la deuxième chambre gonflable 22, celle-ci vient se plaquer contre la paroi de la partie centrale restreinte 3c du manchon. L'ensemble du dispositif 20 et du manchon 3, est ainsi solidarisé et peut être déplacé en translation horizontale vers l'extrémité ouverte dépourvue de manchon d'un élément de conduite 1₁, jusqu'à venir buter contre l'extrémité 2a du chemisage 2 de l'élément de conduite 1₁ comme représenté sur la figure 3. A ce moment, comme représenté sur la figure 4, les connecteurs électriques 21a de la première chambre gonflable 21 sont disposés en vis-à-vis de connecteurs électriques correspondants 4a du fil chauffant à une extrémité du manchon, comme représenté sur les figures 3 et 4. A ce stade, la première chambre gonflable 21 peut être gonflée de manière à venir se plaquer contre la partie terminale 3a du manchon en butée contre l'extrémité 2a du chemisage et on injecte le courant électrique dans le fil chauffant 4 ce qui fait fondre toute la zone 3a de la surface externe 3-2 du manchon recouverte par le fil chauffant, et ainsi permet de réaliser une soudure par électro-fusion du plan de contact entre le manchon tubulaire de jonction 3 au niveau de son extrémité 3a et l'extrémité 2a de la chemise 2. La première chambre 21 est expansée avec une pression ce qui permet de garantir une excellence compacité dans le plan de fusion ainsi que l'absence de bulles d'air préjudiciable à une bonne étanchéité au niveau de la surface de fusion.

Ensuite, pour réaliser les étapes de contrôle de la qualité de la soudure, on dégonfle les première et deuxième chambres 21 et 22, et on les déplace en translation dans la direction inverse, jusqu'à la position de la figure 6 dans laquelle les moyens de contrôle de soudure 23 sont en vis-à-vis de l'extrémité électro-soudée du manchon et du chemisage interne de l'élément de conduite 1₁.

Lesdites première et deuxième chambres gonflables 21 et 22, en position dégonflées restent relativement proches des parois du manchon de sorte que le guidage du dispositif 20 en translation longitudinale à l'intérieur du manchon peut se faire aisément. Avantageusement, ce guidage peut être réalisé manuellement ou par un chariot ou autres moyens de guidage en translation longitudinale.

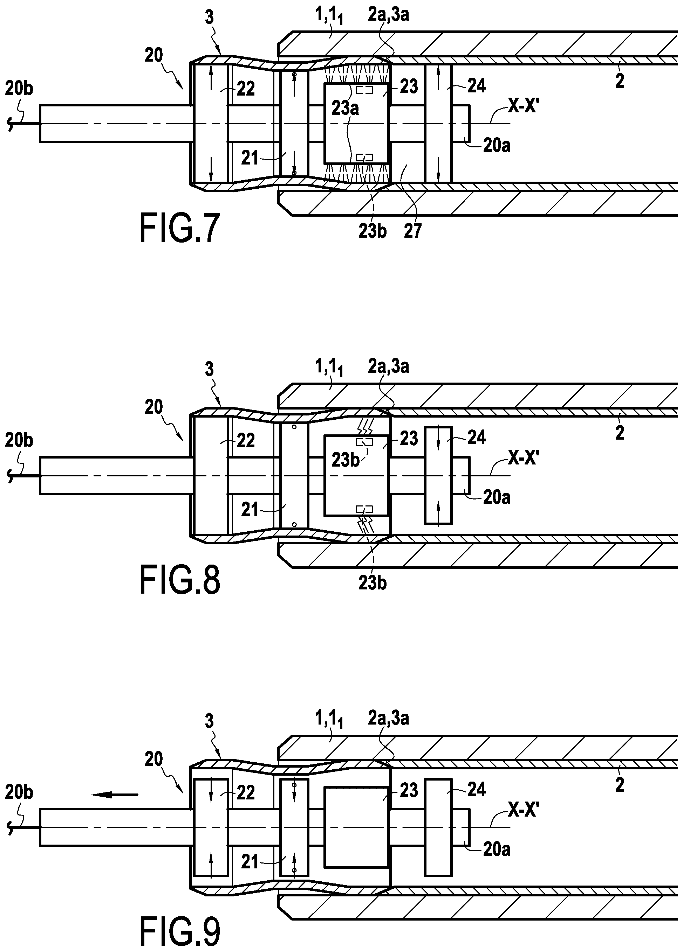

Sur les figures 7 et 8, on montre les étapes de réalisation du contrôle de la soudure. Dans une première étape, on re-solidarise le dispositif 20 avec le manchon 3 en gonflant la première chambre gonflable 21 et la deuxième chambre 22, en vis-à-vis de la partie centrale restreinte 3c et de la partie terminale opposée 3a du manchon 3. Puis, on injecte de l'eau par les buses 23a contre l'extrémité électro-soudée du manchon dans le compartiment 27 délimité par la première chambre 21 et la troisième chambre gonflée au maximum 24 à l'intérieure de laquelle sont positionnés les moyens d'émission d'ultrasons et de contrôle de soudure 23. Puis, on réalise l'émission d'ondes ultrasonores avec les capteurs ultrasons 23b destinés à vérifier la qualité de la soudure réalisée par électro-fusion. L'injection d'eau est réalisée simultanément à l'émission d'ultrasons localement afin d'assurer la bonne transmission des ondes ultrasonores. Une fois le contrôle de soudure réalisé, on peut évacuer en translation le dispositif 20 après avoir au préalable dégonflé toutes les chambres gonflables. Ainsi, se trouve prêt à être posé un élément de conduite 1₁ équipé à une de ses extrémités d'un manchon tubulaire de jonction 3 formant une partie mâle prêt à être encastré dans la partie femelle dépourvue de manchon tubulaire de jonction d'un deuxième élément de conduite.

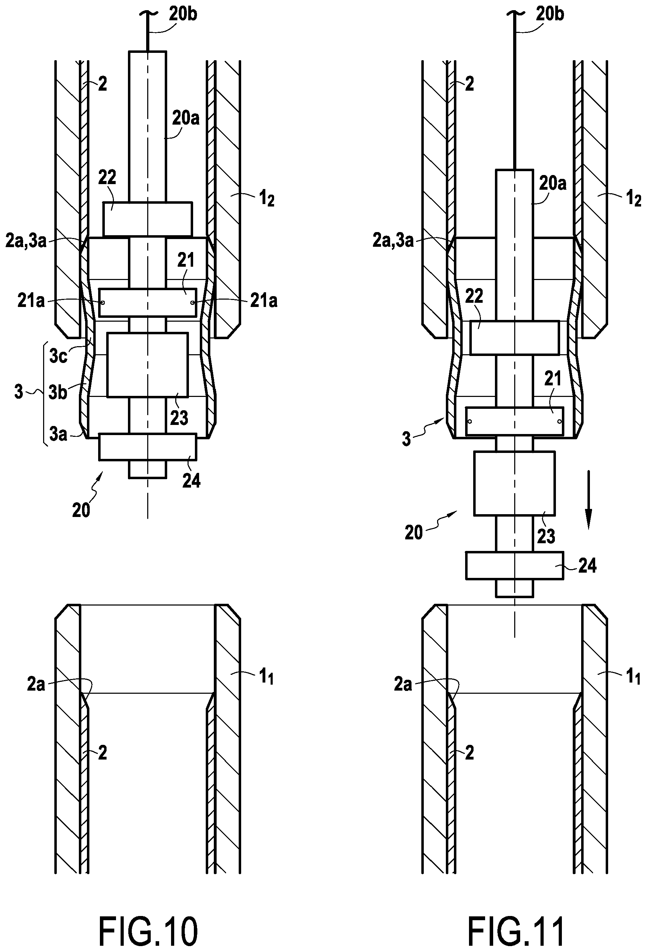

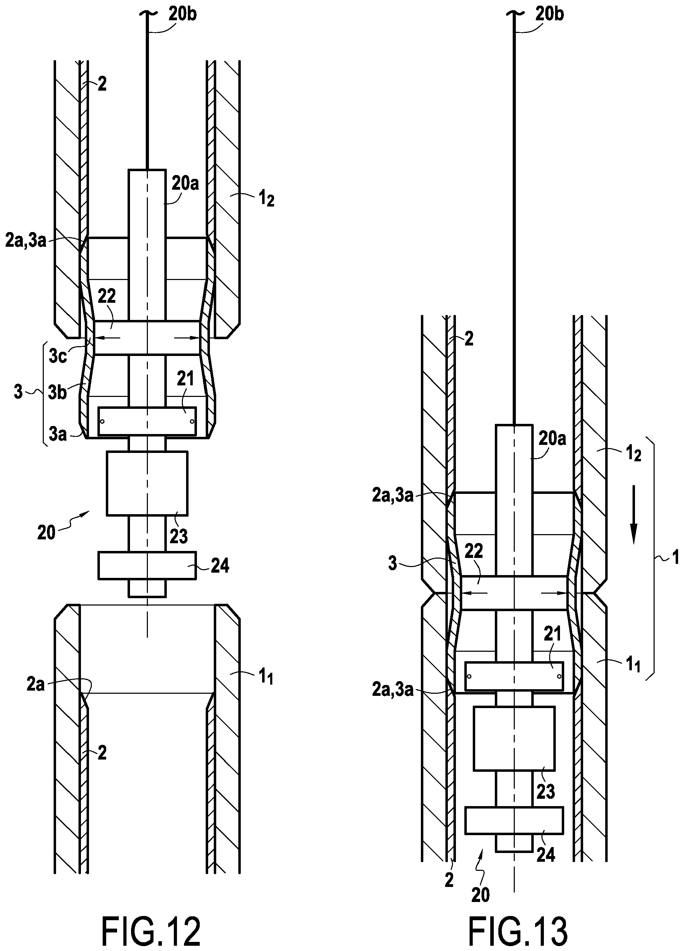

Sur les figures 10-21 on a représenté l'assemblage entre deux longueurs unitaires de conduite chemisée, lors de l'installation sur site qui est effectuée à bord d'un navire de pose 10 équipé d'une tour de pose en J 10a, tel que représenté sur la figure 1B. Un nouvel élément de conduite 1₂ chemisée équipé d'un manchon tubulaire 3 à une de ses extrémités est transféré, de manière connue, de la position horizontale à la position oblique correspondant à l'inclinaison de la tour pour être ensuite positionné dans l'axe l'élément de conduite terminal 1₁ de l'extrémité de la rame en cours de pose. Ledit élément de conduite à assembler 1₂ est ensuite déplacé axialement vers l'élément de conduite terminal 1₁ en suspension. Une partie de manchon 3 formant une extrémité mâle de l'un des deux éléments de conduite pénètre dans l'extrémité femelle dépourvue de manchon de l'autre élément de conduite à assembler, jusqu'à ce que la partie terminale 3a du manchon vienne en contact avec la partie terminale 2a de la chemise à l'intérieur de l'autre élément de conduite. Les deux éléments de conduite étant proches de la verticale, un bras manipulateur permet à la partie terminale 3a du manchon de s'insérer complètement contre la partie terminale de la chemise pour atteindre la configuration de la figure 13 où les deux élément de conduite 1₁, 1₂ sont maintenus à quelques mm de distance, par exemple grâce à ce même bras manipulateur non représenté, de manière à pouvoir effectuer, de manière connue, la soudure 5 au moyen d'un robot de soudage orbital 5a connu de l'homme de l'art. Sur les figures, on a représenté les parois des conduites acier chanfreinées distantes de quelques mm en cours de soudage, l'écran 8 constitué d'un matelas en mousse céramique limite le transfert de chaleur et protège le manchon thermoplastique pendant toute la durée du processus de soudage. Et, en partie droite, on a représenté la soudure 5 terminée.

Dans un mode de réalisation représenté sur les figures 10-21, un nouvel élément de conduite terminal 1₂ est équipé d'un manchon tubulaire de jonction 3 à son extrémité inférieure formant ainsi une extrémité mâle descendue vers l'extrémité supérieure femelle d'un premier élément de conduite 1₁ dépourvue de manchon formant l'élément de conduite terminal supérieur d'un conduite en cours de pose maintenue fixement en suspension en pied de tour.

Dans une première étape, on descend par l'ombilical 20b le dispositif de mise en place de manchon 20 de sorte que la première chambre gonflable 21 soit positionnée en vis-à-vis de la partie terminale 3a de l'extrémité inférieure du manchon 3 avec les connecteurs 21a en vis-à-vis des connecteurs 4a du fil chauffant de la partie terminale 3a. Ainsi, la deuxième chambre gonflable 22 se trouve en vis-à-vis de la partie centrale 3c du manchon 3, comme représenté figure 11. A ce moment, on gonfle la deuxième chambre 22 de manière à solidariser le dispositif 20 avec le manchon 3, le dispositif 20 étant maintenant descendu avec l'élément de conduite 1₂ jusqu'à encastrer l'extrémité mâle du manchon dépassant de l'extrémité de l'élément de conduite 1₂ à l'intérieure de la partie femelle non chemise de l'élément de conduite 1₁, de sorte que les parties terminales 3a du manchon 3 viennent buter contre la partie terminale 2a du chemisage 2 de l'élément de conduite 1₁ comme représenté sur la figure 13.

A ce stade pour réaliser, l'électro-fusion, on gonfle la première chambre gonflable 21, en connectant les connecteurs 21a avec les connecteurs 4a du fil chauffant sur la paroi interne du manchon et on injecte le courant électrique dans le fil chauffant de manière à réaliser l'électro-fusion entre les parties terminales 3a du manchon 4 et partie terminale 2a du chemisage 2, l'électricité étant acheminée dans un conduit à l'intérieur de l'ombilical 20b.

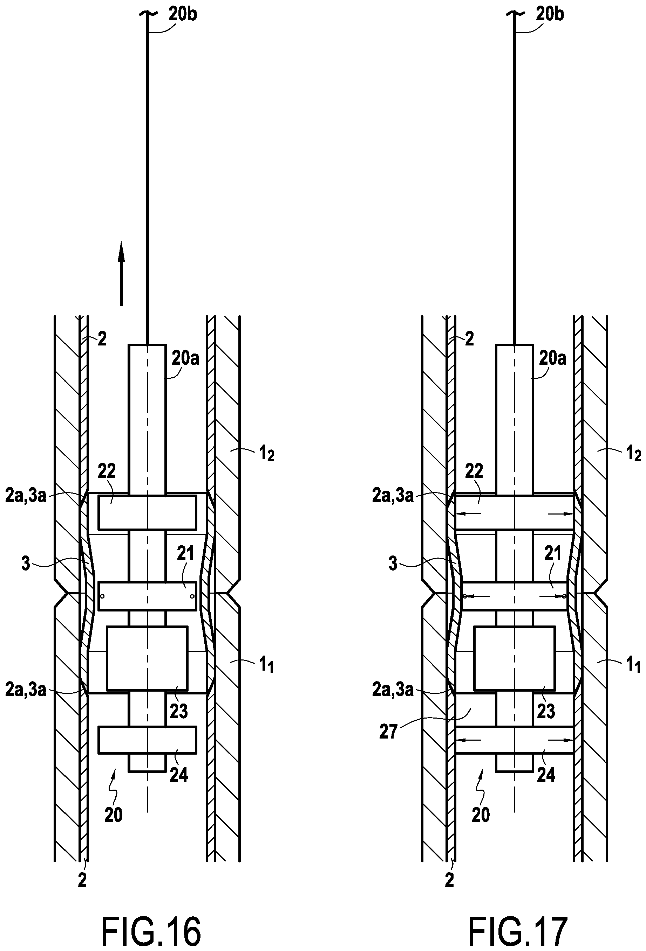

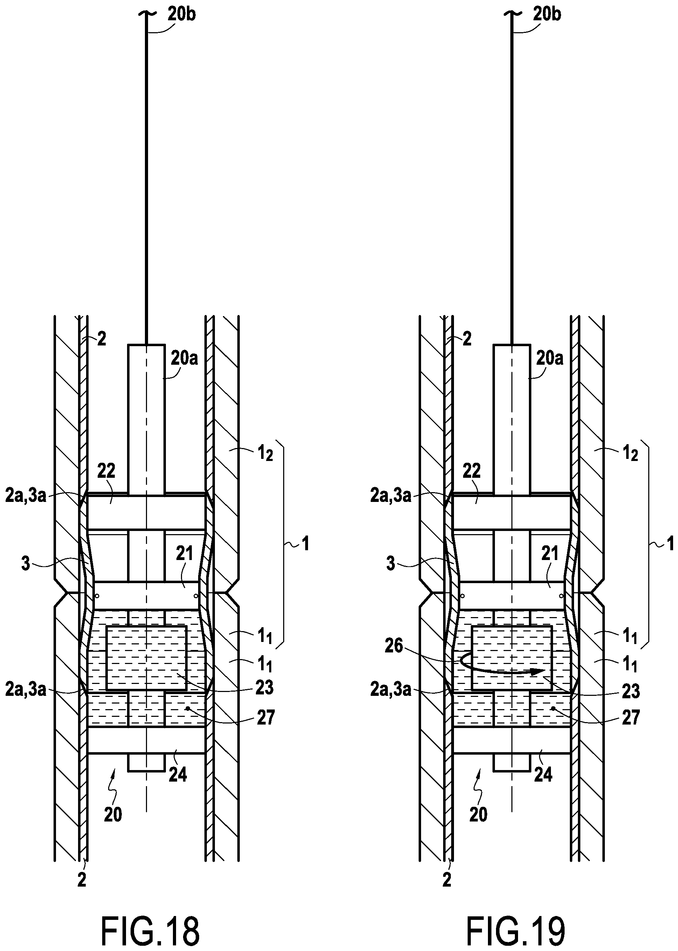

Ensuite, pour réaliser le contrôle de la soudure, on dégonfle les deux chambres 21 et 22 et on relève en translation longitudinale XX' le dispositif 20 de sorte que comme représenté sur la figure 16, les moyens de contrôle de soudure 23, se trouvent en vis-à-vis des extrémités 2a-3a préalablement électro-soudées. A ce stade, c'est maintenant la première chambre gonflable 21 qui est en vis-à-vis de la partie centrale de diamètre réduit 3c du manchon 3, tandis que la deuxième chambre gonflable 22 se trouve en vis-à-vis de la partie terminale 3a supérieure du manchon déjà électro-soudée (sur le pont du navire) avant la descente de l'élément 1₂. A ce stade, on réalise une nouvelle solidarisation du dispositif 20 avec le manchon 3 en gonflant les deux chambres 21 et 22 contre la paroi interne du manchon 3. Ensuite, on réalise l'expansion de la troisième chambre gonflable 24 pour réaliser une paroi étanche à l'extrémité inférieure du mandrin 20a de manière à délimiter un compartiment étanche 27 entre la paroi 24 et la première chambre gonflable en position d'expansion 21. Avant de réaliser le contrôle de soudure, on réalise une injection d'eau dans le compartiment 27 par l'intermédiaire les buses 23a. L'eau étant acheminée à l'intérieur de l'ombilical 20b. Sur la figure 19, on réalise ensuite le contrôle de la zone d'électro-fusion par l'émission d'ondes sonores via des sondes 23b placées contre le plastique. Ensuite, on peut dégonfler les différentes parois gonflables, 21, 22, 24, et remonter le dispositif 20 pour une prochaine mise en œuvre par assemblage d'un nouvel élément de conduite.

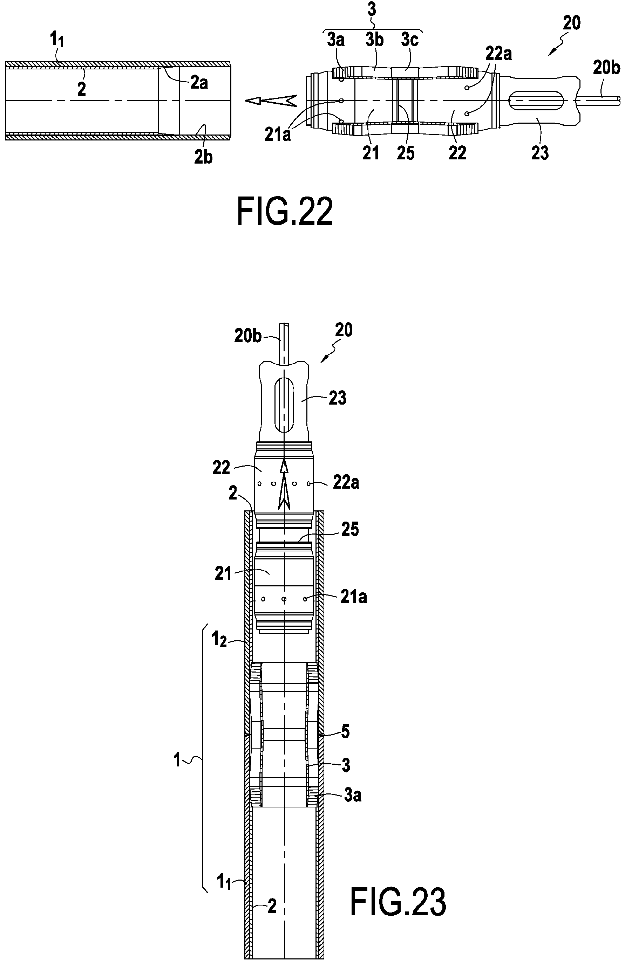

Sur les figures 22 et 23 on a représenté un mode de réalisation dans lesquels les deux chambres 21 et 22 sont équipées de connecteurs électriques 21a et 22a, placés de telles sortes qu'ils puissent être positionnés simultanément au regard des connecteurs électriques 4a aux deux extrémités d'un même manchon 3, l'ensemble des deux chambres 21 et 22 étant d'une longueur supérieure au manchon 3 de sorte que les deux chambres peuvent coïncider et se plaquer avec les deux extrémités du manchon simultanément.

Alternativement, on peut descendre un nouvel élément de conduite 1₂ déjà équipé d'un manchon tubulaire de jonction 3 à son extrémité supérieure, mais dont l'extrémité inférieure dépourvue de manchon formant ainsi une extrémité femelle dudit nouvel élément de conduite est descendue vers l'extrémité supérieure mâle d'un premier élément de conduite 1₁ équipée d'un manchon tubulaire de jonction 3 à son extrémité supérieure, ce premier élément de conduite 1₁ formant l'élément de conduite terminal supérieur d'une conduite en cours de pose maintenue fixement en suspension en pied de tour.

## Revendications

1. Dispositif (20) utile pour la mise en place d'un manchon tubulaire de jonction (3) à l'intérieur de l'extrémité d'un premier élément de conduite en acier (1₁, 1₂) à chemisage interne en matériau thermoplastique (2) et utile pour l'assemblage bout à bout de l'extrémité de ce premier élément de conduite équipée d'un dit manchon avec l'extrémité dépourvue de dit manchon d'un deuxième élément de conduite à chemisage interne en matériau thermoplastique (2), lesdites extrémités ainsi bout à bout des deux éléments de conduite étant destinées à être soudées (5) l'une à l'autre, ledit manchon présentant à chaque extrémité une partie terminale de paroi tubulaire (3a), de préférence d'épaisseur réduite par rapport à l'épaisseur de la partie courante adjacente (3b) de la paroi tubulaire dudit manchon, ledit manchon (3) présentant à au moins une, de préférence à chacune, desdites parties terminales (3a) du manchon un fil chauffant par effet Joule (4) disposé, de préférence en spirale, en surface externe (3-2) de ladite partie terminale (3a) dudit manchon apte à créer par chauffage une zone de contact étanche par fusion entre elles des matières constitutives d'une partie au moins de ladite partie terminale du manchon et respectivement une partie terminale de dit chemisage en contact l'une avec l'autre, et parcourues par ledit fil chauffant, ledit dispositif (20) de mise en place de manchon comprenant un mandrin (20a) d'axe longitudinale (XX') supportant en surface au moins une première chambre gonflable (21) comprenant une paroi périphérique expansible radialement par gonflage, ladite première paroi comprenant au moins un premier connecteur électrique (21a) apte à être connectée à une extrémité d'un dit fil chauffant, et ledit mandrin (20a) supportant également un ombilical (20b) comprenant au moins un conduit d'alimentation en air comprimé pour le gonflage de ladite première chambre gonflable (21) et un conduit d'alimentation électrique relié au dit premier connecteur électrique (21a),
ledit dispositif (20) de mise en place de manchon étant **caractérisé en ce que** ledit mandrin (20a) supporte en outre en surface externe une deuxième chambre gonflable (22) comprenant une paroi périphérique expansible radialement par gonflage, espacée de ladite première chambre gonflable (21) dans ladite direction longitudinale et ledit mandrin supporte en outre un dispositif de contrôle de soudure (23), ledit ombilical (20b) traversant l'intérieur dudit mandrin (20a) et comprenant des conduits d'alimentation en électricité, et de préférence aussi en eau, desdits moyens de contrôle de soudure.

2. Dispositif selon la revendication 1, **caractérisé en ce que** ledit dispositif de contrôle de soudure (23) est disposé dans la direction longitudinale du mandrin en amont ou en aval des deux dites première et deuxième chambres, de préférence de l'autre côté de ladite première chambre que ladite deuxième chambre.

3. Dispositif selon la revendication 1 ou 2, **caractérisé en ce que** ledit dispositif contrôle de soudure (23) comprend :
- au moins une sonde à ultrason (23a), et
- au moins une buse (23b) d'injection d'eau alimentée en eau par un conduit passant dans ledit ombilical, et
- de préférence des moyens d'inspection visuelle de la soudure, de préférence une caméra (23c).

4. Dispositif selon la revendication 3, **caractérisé en ce que** ladite sonde à ultrasons (23a) et/ou ladite buse d'injection d'eau (23b) est (ou sont) apte(s) à être déplacé(s) en rotation (27) en vis-à-vis des parties d'extrémité dudit manchon après électro-fusion, selon un axe de rotation disposé dans l'axe longitudinal dudit mandrin.

5. Dispositif selon l'une des revendications 1 à 4, **caractérisé en ce que** ledit mandrin (20a) supporte en outre des moyens d'obturation réversible (24) du passage entre le mandrin et la paroi interne du manchon ou de la conduite, lesdits moyens d'obturation (24) étant disposés dans ladite direction longitudinale du mandrin de sorte que lesdits moyens de contrôle de soudure (23) soient disposés entre lesdits moyens d'obturation réversible (24) et au moins une dite première ou deuxième chambre (21, 22).

6. Dispositif selon la revendication 5, **caractérisé en ce que** lesdits moyens d'obturation réversible (24) sont constitués par une troisième chambre gonflable comprenant une paroi périphérique expansible radialement par gonflage.

7. Dispositif selon l'une des revendications 1 à 6, **caractérisé en ce que** ladite paroi expansible de ladite deuxième chambre gonflable (22) comprend au moins un deuxième connecteur électrique (22a) apte à être relié à l'extrémité d'un dit fil chauffant.

8. Dispositif selon l'une des revendications 1 à 7, **caractérisé en ce que** les deux dites première et deuxième chambres gonflables (21, 22) s'étendent sur une longueur l1 et respectivement l2 et sont espacées d'une distance d dans la direction longitudinale du mandrin telles que lorsqu'une dite première chambre gonflable est en expansion radiale de plaquage contre la partie terminale du manchon, notamment lorsque celle-ci est disposée contre la partie terminale du chemisage interne de la conduite pour réaliser l'électro-fusion, la deuxième chambre gonflable se trouve en vis à vis et peut venir se plaquer contre une partie de la paroi interne tubulaire dudit manchon.

9. Dispositif selon l'une des revendications 1 à 8, **caractérisé en ce que** lesdites chambres gonflables (21, 22, 24) sont formées par une enveloppe souple ou semi-rigide tubulaire à section transversale circulaire disposée autour dudit mandrin cylindrique (20a) et selon le même axe longitudinal (XX') que ledit mandrin, les bords circulaires à chaque extrémité longitudinale de chaque dite enveloppe rejoignant la paroi externe dudit mandrin de sorte que sous l'effet du gonflage de ladite chambre ladite enveloppe prend une forme bombée convexe en section longitudinale axial formant la paroi expansée radialement de ladite chambre.

10. Procédé de mise en place d'un manchon tubulaire de jonction (3) au niveau d'une extrémité d'un élément unitaire de conduite(1₁, 1₂) à chemisage interne en matériau thermoplastique (2) pour fixer un dit manchon en partie terminale (2a) d'un dit chemisage, ledit manchon présentant à chaque extrémité une partie terminale de paroi tubulaire (3a), de préférence d'épaisseur réduite par rapport à l'épaisseur de la partie courante adjacente (3b) de la paroi tubulaire dudit manchon, ledit manchon (3) présentant à au moins une, de préférence à chacune, desdites parties terminales (3a) du manchon un fil chauffant par effet joule (4) disposé, de préférence en spirale, en surface externe (3-2) de ladite partie terminale (3a) dudit manchon et on crée par chauffage une zone de contact étanche par fusion entre elles des matières constitutives d'une partie au moins de ladite partie terminale (3a) du manchon et respectivement une partie terminale (2a) de dit chemisage en contact l'une avec l'autre, et parcourues par ledit fil chauffant, à l'aide d'un dispositif selon l'une des revendications 1 à 9.

11. Procédé selon la revendication 10, **caractérisé en ce qu'**on réalise les étapes suivantes, de préférence sur le pont d'un navire de pose (10) ou à terre:
i.1) on positionne ledit dispositif de mise en place de manchon (20) à l'intérieur dudit manchon (3) de sorte qu'au moins une dite première chambre gonflable (21) soit en position en vis-à-vis d'une première partie terminale (3a) du manchon avec son premier connecteur (21a) en vis à vis d'une extrémité de dit fil chauffant, l'autre desdites première et deuxième chambres gonflables (21, 22) étant en vis de la paroi interne de la partie courante (3b) du manchon et on gonfle au moins ladite deuxième chambre gonflable de manière à solidariser le dispositif de mise en place de manchon (20) avec ledit manchon en plaquant la paroi expansible de ladite deuxième chambre contre la paroi interne dudit manchon tubulaire, et
i.2) on déplace l'ensemble ainsi formé du manchon et dudit dispositif de mise en place de manchon (20) dans la direction longitudinale (XX') axialement que l'on insère à l'intérieur d'une extrémité ouverte dépourvue de manchon d'un élément de conduite (1₁), jusqu'à ce que ladite première partie terminale (3a) du manchon soit en contact avec ladite partie terminale (2a) du chemisage de ladite extrémité dudit élément de conduite, et
i.3) on gonfle ladite première chambre gonflable pour la plaquer contre la paroi interne de ladite première partie terminale de manchon telle que ledit premier connecteur électrique (21a) soit branché, de préférence par l'intermédiaire d'un connecteur électrique complémentaire (4a), à une extrémité d'un dit fil chauffant (4), et
i.4) on alimente ledit fil chauffant (4) en électricité, en exerçant simultanément une pression de ladite partie terminale de manchon contre ladite partie terminale de chemisage en contact l'une avec l'autre par gonflage de ladite première chambre gonflable (21) pour réaliser une dite zone de soudure par électro-fusion des matières constitutives d'une partie au moins de ladite partie terminale du manchon et respectivement une partie terminale de dit chemisage en contact l'une avec l'autre, et parcourues par ledit fil chauffant, et
i.5) on dégonfle lesdites première et deuxième chambres gonflables, et on déplace en translation ledit dispositif de mise en place de manchon de sorte que ledit dispositif de contrôle de soudure (23) sont disposé en vis à vis de ladite partie terminale de manchon correspondant à ladite zone de soudure par électro-fusion, et
i.6) on gonfle à nouveau les deux première et deuxième chambres gonflables qui viennent se plaquer et solidariser contre la paroi interne du manchon, et on actionne ledit dispositif de contrôle de soudure pour contrôler ladite soudure, de préférence en réalisant de l'injection d'eau sur ladite partie terminale du manchon, et
i.7) on dégonfle lesdites première et deuxième chambres et on déplace en translation ledit dispositif de mise en place de manchon (20) pour l'évacuer.

12. Procédé de réalisation d'une conduite (1) à l'aide d'un dispositif selon l'une des revendications 1 à 9, dans lequel on réalise l'assemblage d'éléments unitaires de conduite (1₁, 1₂) comprenant un dit chemisage (2), de préférence avec une partie terminale d'épaisseur réduite (2a) à chaque extrémité, et un dit manchon tubulaire de jonction (3) inséré et fixé à seulement une extrémité de chaque dit élément de conduite (1₁, 1₂) et dépassant de celle-ci, le dépassement dudit manchon définissant une extrémité mâle de chaque dit élément de conduite (1₁) apte à être assemblée avec une extrémité dépourvue de dit manchon définissant une extrémité femelle d'un autre dit élément de conduite (1₂), ledit manchon présentant à chaque extrémité une partie terminale de paroi tubulaire (3a), de préférence d'épaisseur réduite par rapport à l'épaisseur de la partie courante adjacente (3b) de la paroi tubulaire dudit manchon, ledit manchon (3) présentant à au moins une, de préférence à chacune, desdites parties terminales (3a) du manchon un fil chauffant par effet Joule (4) disposé, de préférence en spirale, en surface externe (3-2) de ladite partie terminale (3a) dudit manchon apte à créer par chauffage une zone de contact étanche par fusion entre elles des matières constitutives d'une partie au moins de ladite partie terminale du manchon et respectivement une partie terminale de dit chemisage en contact l'une avec l'autre, et parcourues par ledit fil chauffant, en réalisant les étapes suivantes dans lesquelles :
a) on introduit un dispositif de mise en place de manchon (20) à l'intérieur d'un dit élément unitaire de conduite de sorte que ladite première chambre gonflable (21) soit disposée avec son premier connecteur électrique en vis-à-vis de l'extrémité d'un fil chauffant au niveau d'une partie terminale (3a) dudit manchon qui lui est fixé, et on fixe ledit dispositif de mise en place de manchon (20) à l'intérieur dudit manchon par gonflage d'une dite deuxième chambre gonflable (22) contre la paroi interne dudit manchon, et
b) avant ou après l'étape a), on introduit et insère en force la partie de manchon formant ladite extrémité mâle d'un élément de conduite (1₂) dans l'extrémité femelle de l'autre élément de conduite, dans la direction longitudinale (XX') axialement, jusqu'à ce que ladite partie terminale (3a) du manchon de la ladite extrémité mâle dudit élément de conduite terminal soit en contact avec ladite partie terminale (2a) du chemisage de ladite extrémité femelle dudit élément de conduite à assembler, et
c) on réalise ledit soudage (5) des extrémités des deux éléments de conduite bout à bout, et
d) on réalise le gonflage d'une dite première chambre gonflable et on relie son dit premier connecteur électrique (21a) à l'extrémité du fil chauffant au niveau de ladite partie terminale (3a) du manchon qui lui est en vis à vis, et on alimente ledit fil chauffant (4) en électricité, en exerçant simultanément une pression de ladite partie terminale de manchon contre ladite partie terminale de chemisage en contact l'une avec l'autre pour réaliser une dite zone de soudure par électro-fusion au niveau d'une partie au moins de l'interface des surfaces de chaque dite partie terminale (3a) du manchon et chaque dite partie terminale (2a) de chemisage en contact l'une avec l'autre et parcourues par le fil chauffant à la surface du manchon, pour réaliser une dite zone de contact étanche par fusion, et
e) on dégonfle lesdites première et deuxième chambres gonflables et on déplace en translation ledit dispositif (20) de mise en place de manchon (3).

13. Procédé selon la revendication 12, **caractérisé en ce qu'**on réalise les étapes suivantes dans lesquelles :
a.1) on descend dans une tour (11) de pose de conduite d'un navire de pose (10) un premier élément de conduite (1₂) équipé d'un dit manchon à une de ses extrémités, jusqu'à proximité de l'extrémité de l'élément de conduite terminal supérieur (1₁) de la conduite en cours d'assemblage partiellement immergée en bas de la tour, et
a.2) on descend un dit dispositif de mise en place de manchon (20) avec lesdites première et deuxième chambres au moins partiellement dégonflées, que l'on solidarise à un dit manchon fixé à un desdits premier ou deuxième élément de conduite, par gonflage d'une dite deuxième chambre que l'on plaque contre la paroi interne du manchon dans sa partie courante, ladite première chambre étant disposée en vis-à-vis d'une partie terminale libre dudit manchon avec son premier connecteur en vis-à-vis d'une extrémité de dit fil chauffant,
a.3) on gonfle la première chambre (21) qui se plaque contre la partie terminale (3a) dudit manchon telle que ledit connecteur électrique (21a) soit branché, de préférence via un connecteur électrique complémentaire (4a), à une extrémité dudit fil chauffant, et
b) après ou avant l'étape a.3), on réalise l'assemblage des deux éléments de conduite en introduisant et insérant en force la partie d'un manchon formant une dite extrémité mâle d'un élément de conduite dans l'extrémité femelle dépourvue de manchon de l'autre élément de conduite,
c) on réalise ledit soudage (5) des extrémités des deux éléments de conduite bout à bout, et
d.1) on alimente ledit fil chauffant (4) en électricité, en exerçant simultanément une pression de ladite partie terminale de manchon contre ladite partie terminale de chemisage en contact l'une avec l'autre par gonflage de ladite première chambre (21) pour réaliser une dite zone de soudure par électro-fusion, et
d.2) on dégonfle lesdites première et deuxième chambres, et on déplace en translation ledit mandrin de sorte que lesdits moyens de contrôle de soudure (23) soient disposés en vis à vis de ladite partie terminale (3a) de manchon électro-soudée, et
d.3) on gonfle les deux premier et deuxième chambre qui viennent se plaquer et solidariser contre la paroi interne du manchon, et
d.4) on actionne lesdits moyens de contrôle de soudure (23) pour contrôler ladite soudure, de préférence en réalisant au préalable de l'injection d'eau sur ladite partie terminale du manchon.

14. Procédé selon la revendication 13, **caractérisé en ce qu'**à l'étape d.4), on réalise les opérations suivantes dans lesquelles :
d.4.1) on actionne (26) en fermeture lesdits moyens d'obturation (24) de sorte qu'on forme un compartiment étanche (27) délimité par ladite première chambre gonflable (21) et lesdits moyens d'obturation (24) fermant le passage à l'intérieur de la conduite, compartiment étanche (27) au sein duquel sont disposés lesdits moyens de contrôle de soudure (23), pour contrôler ladite soudure, et
d.4.2) on remplit d'eau ledit compartiment étanche (27) et actionne (26) lesdits moyens de contrôle de soudure pour contrôler ladite soudure, et
d.4.3) ensuite, on actionne en ouverture lesdits moyens d'obturation réversibles (24).

15. Procédé selon l'une des revendications 12 à 14, **caractérisé en ce qu'**avant l'étape a), on réalise les étapes i.1) à i.7) du procédé de la revendication 11, de préférence sur le pont du navire ou à terre, pour fixer un dit manchon en partie terminale d'un dit élément de conduite (1₁) avant son assemblage avec un autre dit élément de conduite.

## Patentansprüche

1. Vorrichtung (20), die zur Installation einer rohrförmigen Verbindungsmuffe (3) im Inneren des Endes eines ersten Rohrelements (l₁ l₂) aus Stahl mit einer inneren Auskleidung aus einem thermoplastischen Material (2) dient und zum stumpfen Zusammenbau des Endes dieses ersten Rohrelements, das mit einer Muffe versehen ist, mit dem Ende ohne die Muffe eines zweiten Rohrelements mit einer inneren Auskleidung aus einem thermoplastischen Material (2) dient, wobei die so stumpf aneinandergefügten Enden der zwei Rohrelemente dazu bestimmt sind, aneinander geschweißt (5) zu werden, wobei die Muffe an jedem Ende einen Endteil (3a) einer rohrförmigen Wand aufweist, dessen Dicke vorzugsweise in Bezug auf die Dicke des benachbarten laufenden Teils (3b) der rohrförmigen Wand der Muffe verringert ist, wobei die Muffe (3) an mindestens einem, vorzugsweise an jedem, der Endteile (3a) der Muffe einen durch Joule-Effekt heizbaren Draht (4) aufweist, der, vorzugsweise spiralförmig, an einer äußeren Oberfläche (3-2) des Endteils (3a) der Muffe angeordnet ist und geeignet ist, durch Erhitzung eine dichte Kontaktzone durch Verschmelzen der Materialien, aus denen mindestens ein Teil des Endteils der Muffe beziehungsweise ein Endteil der Auskleidung bestehen, die miteinander in Kontakt sind und von dem Heizdraht durchquert werden, untereinander zu erzeugen, wobei die Vorrichtung (20) zur Installation der Muffe einen Dorn (20a) mit einer Längsachse (XX') umfasst, der an der Oberfläche mindestens eine erste aufblasbare Kammer (21) trägt, die eine durch Aufblasen radial dehnbare Umfangswand umfasst, wobei die erste Wand mindestens einen ersten elektrischen Verbinder (21a) umfasst, der geeignet ist, mit einem Ende eines Heizdrahts verbunden zu werden, und der Dorn (20a) auch eine Versorgungsleitung (20b) trägt, die mindestens eine Leitung zur Versorgung mit Druckluft für das Aufblasen der ersten aufblasbaren Kammer (21) und eine Leitung zur Stromversorgung umfasst, die mit dem ersten elektrischen Verbinder (21a) verbunden ist,
wobei die Vorrichtung (20) zur Installation der Muffe **dadurch gekennzeichnet ist, dass** der Dorn (20a) ferner an der äußeren Oberfläche eine zweite aufblasbare Kammer (22) trägt, die eine durch Aufblasen radial dehnbare Umfangswand umfasst, die von der ersten aufblasbaren Kammer (21) in der Längsrichtung beabstandet ist, und die Muffe ferner eine Schweißsteuervorrichtung (23) trägt, wobei die Versorgungsleitung (20b) das Innere des Dorns (20a) durchquert und Leitungen zur Versorgung der Schweißsteuermittel mit Strom und vorzugsweise auch mit Wasser umfasst.

2. Vorrichtung nach Anspruch 1, **dadurch gekennzeichnet, dass** die Schweißsteuervorrichtung (23) in der Längsrichtung des Dorns den beiden von der ersten Kammer und der zweiten Kammer vorgeschaltet oder nachgeschaltet, vorzugsweise auf der anderen Seite der ersten Kammer als die zweite Kammer, angeordnet ist.

3. Vorrichtung nach Anspruch 1 oder 2, **dadurch gekennzeichnet, dass** die Schweißsteuervorrichtung (23) umfasst:
- mindestens eine Ultraschallsonde (23a) und
- mindestens eine Düse (23b) zum Einspritzen von Wasser, die durch eine Leitung, die in der Versorgungsleitung verläuft, mit Wasser versorgt wird, und
- vorzugsweise Mittel zur Sichtprüfung der Schweißung, vorzugsweise eine Kamera (23c).

4. Vorrichtung nach Anspruch 3, **dadurch gekennzeichnet, dass** die Ultraschallsonde (23a) und/oder die Wassereinspritzdüse (23b) geeignet ist/sind, gegenüber den Endteilen der Muffe nach dem Elektroschmelzen entlang einer Drehachse, die in der Längsachse des Dorns angeordnet ist, drehbar (27) verlagert zu werden.

5. Vorrichtung nach einem der Ansprüche 1 bis 4, **dadurch gekennzeichnet, dass** der Dorn (20a) ferner Mittel zum reversiblen Verschließen (24) des Durchgangs zwischen dem Dorn und der inneren Wand der Muffe oder des Rohrs trägt, wobei die Mittel (24) zum Verschließen derart in der Längsrichtung des Dorns angeordnet sind, dass die Schweißsteuermittel (23) zwischen den Mitteln (24) zum reversiblen Verschließen und mindestens einer ersten oder zweiten Kammer (21, 22) angeordnet sind.

6. Vorrichtung nach Anspruch 5, **dadurch gekennzeichnet, dass** die Mittel (24) zum reversiblen Verschließen aus einer dritten aufblasbaren Kammer bestehen, die eine durch Aufblasen radial dehnbare Umfangswand umfasst.

7. Vorrichtung nach einem der Ansprüche 1 bis 6, **dadurch gekennzeichnet, dass** die dehnbare Wand der zweiten aufblasbaren Kammer (22) mindestens einen zweiten elektrischen Verbinder (22a) umfasst, der geeignet ist, mit dem Ende eines Heizdrahts verbunden zu werden.

8. Vorrichtung nach einem der Ansprüche 1 bis 7, **dadurch gekennzeichnet, dass** die erste und die zweite aufblasbare Kammer (21, 22) sich beide über eine Länge 11 beziehungsweise 12 erstrecken und um einen Abstand d in der Längsrichtung des Dorns beabstandet sind, derart dass, wenn die erste aufblasbare Kammer durch radiale Ausdehnung gegen den Endteil der Muffe gepresst ist, insbesondere, wenn diese gegen den Endteil der inneren Auskleidung des Rohres angeordnet ist, um das Elektroschmelzen auszuführen, die zweite aufblasbare Kammer sich gegenüberliegend befindet und sich gegen einen Teil der rohrförmigen inneren Wand der Muffe pressen kann.

9. Vorrichtung nach einem der Ansprüche 1 bis 8, **dadurch gekennzeichnet, dass** die aufblasbaren Kammern (21, 22, 24) durch eine biegsame oder halbstarre rohrförmige Hülle mit einem kreisförmigen Querschnitt gebildet sind, die um den zylindrischen Dorn (20a) und entlang derselben Längsachse (XX') wie der Dorn angeordnet ist, wobei die kreisförmigen Ränder an jedem Längsende von jeder Hülle die äußere Wand des Dorns erreichen, derart dass unter der Wirkung des Aufblasens der Kammer die Hülle im axialen Längsschnitt eine konvexe, ausgebauchte Form annimmt, welche die radial ausgedehnte Wand der Kammer bildet.

10. Verfahren zur Installation einer rohrförmigen Verbindungsmuffe (3) im Bereich eines Endes eines Rohreinheitselements (1₁, 1₂) mit einer inneren Auskleidung aus einem thermoplastischen Material (2) zum Befestigen einer Muffe an dem Endteil (2a) einer Auskleidung, wobei die Muffe an jedem Ende einen Endteil (3a) einer rohrförmigen Wand aufweist, dessen Dicke vorzugsweise in Bezug auf die Dicke des benachbarten laufenden Teils (3b) der rohrförmigen Wand der Muffe verringert ist, wobei die Muffe (3) an mindestens einem, vorzugsweise an jedem, der Endteile (3a) der Muffe einen durch Joule-Effekt heizbaren Draht (4) aufweist, der, vorzugsweise spiralförmig, an der äußeren Oberfläche (3-2) des Endteils (3a) der Muffe angeordnet ist, und wobei durch Erhitzung eine dichte Kontaktzone durch Verschmelzen der Materialien, aus denen mindestens ein Teil des Endteils (3a) der Muffe beziehungsweise ein Endteil (2a) der Auskleidung bestehen, die miteinander in Kontakt sind und die von dem Heizdraht durchquert werden, untereinander mittels einer Vorrichtung nach einem der Ansprüche 1 bis 9 erzeugt wird.

11. Verfahren nach Anspruch 10, **dadurch gekennzeichnet, dass** die folgenden Schritte, vorzugsweise auf der Brücke eines Verlegungsschiffs (10) oder an Land, ausgeführt werden:
i.1) Positionieren der Vorrichtung (20) zur Installation der Muffe im Inneren der Muffe (3) derart, dass mindestens eine erste aufblasbare Kammer (21) sich in einer einem ersten Endteil (3a) der Muffe gegenüberliegenden Position befindet, wobei ihr erster Verbinder (21a) sich einem Ende des Heizdrahtes gegenüberliegend befindet, wobei die andere von der ersten und der zweiten aufblasbaren Kammer (21, 22) sich der inneren Wand des laufenden Teils (3b) der Muffe gegenüberliegend befindet, und Aufblasen mindestens der zweiten aufblasbaren Kammer auf eine Weise, dass die Vorrichtung (20) zur Installation der Muffe mit der Muffe durch Pressen der dehnbaren Wand der zweiten Kammer gegen die innere Wand der rohrförmigen Muffe fest verbunden wird, und
i.2) axiales Verlagern der so aus der Muffe und der Vorrichtung (20) zur Installation der Muffe gebildeten Baugruppe, die in das Innere eines offenen Endes ohne Muffe eines Rohrelements (1₁) eingesetzt wird, in der Längsrichtung (XX'), bis der erste Endteil (3a) der Muffe mit dem Endteil (2a) der Auskleidung des Endes des Rohrelements in Kontakt ist, und
i.3) Aufblasen der ersten aufblasbaren Kammer, um sie gegen die innere Wand des ersten Endteils der Muffe zu pressen, derart, dass der erste elektrische Verbinder (21a), vorzugsweise über einen ergänzenden elektrischen Verbinder (4a), an ein Ende eines Heizdrahtes (4) angeschlossen wird, und
i.4) Versorgen des Heizdrahtes (4) mit Strom durch gleichzeitiges Ausüben eines Drucks des Endteils der Muffe gegen den Endteil der Auskleidung, die durch Aufblasen der ersten aufblasbaren Kammer (21) miteinander in Kontakt sind, zum Ausführen einer Zone zum Schweißen durch Elektroschmelzen der Materialien, aus denen zumindest ein Teil des Endteils der Muffe beziehungsweise ein Endteil der Auskleidung bestehen, die miteinander in Kontakt sind und von dem Heizdraht durchquert werden, und
i.5) Ablassen der Luft aus der ersten und der zweiten aufblasbaren Kammer, und translatorisches Verlagern der Vorrichtung zur Installation der Muffe derart, dass die Schweißsteuervorrichtung (23) dem Endteil der Muffe gegenüberliegend angeordnet wird, welcher der Zone zum Schweißen durch Elektroschmelzen entspricht, und
i.6) erneutes Aufblasen beider von der ersten und der zweiten aufblasbaren Kammer, die sich gegen die innere Wand der Muffe pressen und fest damit verbinden, und Betätigen der Schweißsteuervorrichtung zum Steuern des Schweißens, vorzugsweise durch Ausführen des Einspritzens von Wasser auf dem Endteil der Muffe, und
i.7) Ablassen von Luft aus der ersten und zweiten Kammer und translatorisches Verlagern der Vorrichtung (20) zur Installation der Muffe, um sie abzuführen.

12. Verfahren zum Ausführen eines Rohrs (1) mittels einer Vorrichtung nach einem der Ansprüche 1 bis 9, wobei der Zusammenbau von Rohreinheitselementen (1₁, 1₂) ausgeführt wird, die eine Auskleidung (2), vorzugsweise mit einem Endteil mit verringerter Dicke (2a) an jedem Ende, und eine rohrförmige Verbindungsmuffe (3) umfassen, die in nur ein Ende von jedem Rohrelement (1₁, 1₂) eingesetzt und daran befestigt wird und über dieses übersteht, wobei das Überstehen der Muffe ein aufgenommenes Ende von jedem Rohrelement (1₁) definiert, das geeignet ist, mit einem Ende ohne die Muffe zusammengebaut zu werden, das ein aufnehmendes Ende eines anderen Rohrelements (1₂) definiert, wobei die Muffe an jedem Ende einen Endteil (3a) einer rohrförmigen Wand aufweist, dessen Dicke vorzugsweise in Bezug auf die Dicke des benachbarten laufenden Teils (3b) der rohrförmigen Wand der Muffe verringert ist, wobei die Muffe (3) an mindestens einem, vorzugsweise an jedem, der Endteile (3a) der Muffe einen durch Joule-Effekt heizbaren Draht (4) aufweist, der, vorzugsweise spiralförmig, an einer äußeren Oberfläche (3-2) des Endteils (3a) der Muffe angeordnet ist, der geeignet ist, durch Erhitzung eine dichte Kontaktzone durch Verschmelzen der Materialien, aus denen mindestens ein Teil des Endteils der Muffe beziehungsweise ein Endteil der Auskleidung bestehen, die miteinander in Kontakt sind und von dem Heizdraht durchquert werden, untereinander zu erzeugen, durch Ausführen der folgenden Schritte:
a) Einführen einer Vorrichtung (20) zur Installation der Muffe in das Innere eines Rohreinheitselements derart, dass die erste aufblasbare Kammer (21) mit ihrem ersten elektrischen Verbinder dem Ende eines Heizdrahtes im Bereich eines Endteils (3a) der Muffe, die an ihm befestigt ist, gegenüberliegend angeordnet wird, und Befestigen der Vorrichtung (20) zur Installation der Muffe im Inneren der Muffe durch Aufblasen einer zweiten aufblasbaren Kammer (22) gegen die innere Wand der Muffe, und
b) vor oder nach dem Schritt a), Einführen und Einsetzen des Teils der Muffe, der das aufgenommene Ende eines Rohrelements (1₂) bildet, unter Kraftanwendung in das aufnehmende Ende des anderen Rohrelements axial in der Längsrichtung (XX'), bis der Endteil (3a) der Muffe des aufgenommenen Endes des Rohrendelements mit dem Endteil (2a) der Auskleidung des aufnehmenden Endes des zusammenzubauenden Rohrelements in Kontakt ist, und
c) Ausführen des Stumpfschweißens (5) der Enden der zwei Rohrelemente, und
d) Ausführen des Aufblasens einer ersten aufblasbaren Kammer und Verbinden ihres ersten elektrischen Verbinders (21a) mit dem Ende des Heizdrahts im Bereich des Endteils (3a) der ihm gegenüberliegenden Muffe, und Versorgen des Heizdrahts (4) mit Strom bei gleichzeitiger Ausübung eines Drucks des Endteils der Muffe gegen den Endteil der Auskleidung, die miteinander in Kontakt sind, zum Ausführen einer Zone zum Schweißen durch Elektroschmelzen im Bereich von zumindest einem Teil der Grenzfläche der Oberflächen von jedem von dem Endteil (3a) der Muffe und jedem Endteil (2a) der Auskleidung, die miteinander in Kontakt sind und von dem Heizdraht an der Oberfläche der Muffe durchquert werden, um durch Schmelzen eine dichte Kontaktzone zu bilden, und
e) Ablassen von Luft aus der ersten und zweiten aufblasbaren Kammer und translatorisches Verlagern der Vorrichtung (20) zur Installation der Muffe (3).

13. Verfahren nach Anspruch 12, **dadurch gekennzeichnet, dass** die folgenden Schritte ausgeführt werden:
a.1) in einem Rohrverlegungsturm (11) eines Verlegungsschiffes (10), Herablassen eines ersten Rohrelements (1₂), das an einem seiner Enden mit einer Muffe ausgerüstet ist, bis zur Nähe des Endes des oberen Rohrendelements (1₁) des Rohrs, das während des Zusammenbaus teilweise in dem unteren Teil des Turms versenkt ist, und
a.2) Herablassen einer Vorrichtung (20) zur Installation der Muffe mit der ersten und zweiten Kammer mit zumindest teilweise abgelassener Luft, die durch Aufblasen einer zweiten Kammer, die gegen die innere Wand der Muffe in ihrem laufenden Teil gepresst wird, fest mit der an einem von dem ersten oder zweiten Leitungselement befestigten Muffe verbunden werden, wobei die erste Kammer einem freien Endteil der Muffe mit seinem einem Ende des Heizdrahtes gegenüberliegenden Verbinder gegenüberliegend angeordnet wird,
a.3) Aufblasen der ersten Kammer (21), die sich gegen den Endteil (3a) der Muffe presst derart, dass der elektrische Verbinder (21a), vorzugsweise über einen ergänzenden elektrischen Verbinder (4a), mit einem Ende des Heizdrahtes verbunden wird, und
b) nach oder vor dem Schritt a.3), Ausführen des Zusammenbaus der zwei Rohrelemente durch Einführen und Einsetzen des Teils einer Muffe, die ein aufgenommenes Ende eines Rohrelements bildet, unter Kraftanwendung in das aufnehmende Ende ohne Muffe des anderen Rohrelements,
c) Ausführen des Stumpfschweißens (5) der Enden der zwei Rohrelemente, und
d.1) Versorgen des Heizdrahtes (4) mit Strom durch gleichzeitiges Ausüben eines Drucks des Endteils der Muffe gegen den Endteil der Auskleidung, die miteinander in Kontakt sind, durch Aufblasen der ersten Kammer (21) zum Ausführen einer Zone zum Schweißen durch Elektroschmelzen, und
d.2) Ablassen der Luft aus der ersten und zweiten Kammer und translatorisches Verlagern des Dorns derart, dass die Schweißsteuermittel (23) dem Endteil (3a) der elektrogeschweißten Muffe gegenüberliegend angeordnet werden, und
d.3) Aufblasen der ersten und zweiten Kammer, die sich gegen die innere Wand der Muffe pressen und fest damit verbinden, und
d.4) Betätigen der Schweißsteuermittel (23) zum Steuern des Schweißens, vorzugsweise durch vorheriges Ausführen der Einspritzung von Wasser auf dem Endteil der Muffe.

14. Verfahren nach Anspruch 13, **dadurch gekennzeichnet, dass** in Schritt d.4) die folgenden Vorgänge ausgeführt werden:
d.4.1) Betätigen (26) des Schließens der Verschlussmittel (24) derart, dass ein dichter Raum (27) gebildet wird, der durch die erste aufblasbare Kammer (21) und die Verschlussmittel (24) abgegrenzt wird, die den Durchgang zu dem Inneren des Rohrs schließen, wobei in dem dichten Raum (27) die Schweißsteuermittel (23) zum Steuern des Schweißens angeordnet sind, und
d.4.2) Füllen des dichten Raumes (27) mit Wasser und Betätigen (26) der Schweißsteuermittel zum Steuern des Schweißens, und
d.4.3) anschließend Betätigen der Öffnung der Mittel (24) zum reversiblen Verschließen.

15. Verfahren nach einem der Ansprüche 12 bis 14, **dadurch gekennzeichnet, dass** vor dem Schritt a) die Schritte i.1) bis i.7) des Verfahrens nach Anspruch 11, vorzugsweise auf der Brücke des Schiffes oder an Land, zum Befestigen einer Muffe an dem Endteil eines Rohrelements (1₁) vor seinem Zusammenbau mit einem anderen Rohrelement ausgeführt werden.

## Claims

1. A device (20) suitable for installing a tubular junction sleeve (3) inside an end of a first pipe element (1₁, 1₂) made of steel and internally lined with a thermoplastic material (2), and suitable for butt-joining the end of the first pipe element fitted with a said sleeve and an end having no such sleeve of a second pipe element having internal lining of thermoplastic material (2), said ends of the two pipe elements abutting in this way being for welding (5) together, said sleeve presenting at each end a terminal tubular wall portion (3a), preferably of thickness that is smaller than the thickness of the adjacent running portion (3b) of the tubular wall of said sleeve, said sleeve (3) presenting at at least one and preferably both of said terminal portions (3a) of the sleeve a Joule-effect heater wire (4) arranged, preferably as a spiral, at the outer surface (3-2) of said terminal portion (3a) of said sleeve suitable for creating by heating a zone of contact made leaktight by melting between the materials constituting at least a part of said terminal portion of the sleeve and respectively a terminal portion of said lining where they are in contact with each other with said heater wire running thereover, said device (20) for installing a sleeve comprising a mandrel (20a) of longitudinal axis (XX') supporting on its surface at least a first inflatable chamber (21) having a peripheral wall that is radially expandable by inflation, said first wall having at least one first electrical connector (21a) suitable for being connected to one end of a said heater wire, and said mandrel (20a) also supporting an umbilical (20b) comprising at least one compressed air feed duct for inflating said first inflatable chamber (21) and an electrical power supply duct connected to said first electrical connector (21a),
said device (20) for installing a sleeve being **characterized in that** said mandrel (20a) also supports on its outer surface a second inflatable chamber (22) having a peripheral wall that is radially expandable by inflation and spaced apart from said first inflatable chamber (21) in said longitudinal direction, and said mandrel also supports a weld inspection device (23), said umbilical (20b) passing inside said mandrel (20a) and including ducts for electrically powering said weld inspection means, and preferably also for feeding them with water.

2. A device according to claim 1, **characterized in that** said weld inspection device (23) is arranged in the longitudinal direction of the mandrel upstream or downstream relative to said first and second chambers, preferably on the side of said first chamber other than the side on which said second chamber is located.

3. A device according to claim 1 or claim 2, **characterized in that** said weld inspection device (23) comprises:
• at least one ultrasound probe (23a); and
• at least one water injection nozzle (23b) fed with water by a duct passing in said umbilical; and
• preferably visual inspection means inspecting the weld visually, preferably a camera (23c).

4. A device according to claim 3, **characterized in that** said ultrasound probe (23a) and/or said water injection nozzle (23b) is/are suitable for being turned (27) facing the end portions of said sleeve about a turning axis arranged on the longitudinal axis of said mandrel, after electro-fusion.

5. A device according to any one of claims 1 to 4, **characterized in that** said mandrel (20a) also supports reversible shutter means (24) for shutting the passage between the mandrel and the inside wall of the sleeve or of the pipe, said shutter means (24) being arranged in said longitudinal direction of the mandrel so that said weld inspection means (23) are arranged between said reversible shutter means (24) and at least one said first or second chamber (21, 22).

6. A device according to claim 5, **characterized in that** said reversible shutter means (24) are constituted by a third inflatable chamber having a peripheral wall that is radially expandable by inflation.

7. A device according to any one of claims 1 to 6, **characterized in that** said expandable wall of said second inflatable chamber (22) includes at least one second electrical connector (22a) suitable for being connected to an end of a said heater wire.

8. A device according to any one of claims 1 to 7, **characterized in that** said first and second inflatable chambers (21, 22) extend over respective lengths ℓ1 and ℓ2 and are spaced apart by a distance d in the longitudinal direction of the mandrel such that when said first inflatable chamber is radially expanded to press against the terminal portion of the sleeve, in particular when said terminal portion of the sleeve is arranged against the terminal portion of the internal lining of the pipe in order to perform electro-fusion, the second inflatable chamber is in a facing position and can press against a portion of a tubular inside wall of said sleeve.

9. A device according to any one of claims 1 to 8, **characterized in that** each of said inflatable chambers (21, 22, 24) is formed by a flexile or semi-rigid tubular envelope of circular cross-section arranged around said cylindrical mandrel (20a), and about the same longitudinal axis (XX') as said mandrel, the circular edges of each longitudinal end of each said envelope joining the outer wall of said mandrel in such a manner that under the effect of said chamber being inflated said envelope takes on a convex bulging shape in axial longitudinal section forming the radially expanded wall of said chamber.

10. A method of installing a tubular junction sleeve (3) at one end of a unitary pipe element (1₁, 1₂) having an internal lining made of thermoplastic material (2) in order to fasten a said sleeve to the terminal portion (2a) of a said lining, said sleeve presenting at each end a terminal portion of tubular wall (3a) that is preferably of thickness that is smaller than the thickness of the adjacent running portion (3b) of the tubular wall of said sleeve, said sleeve (3) presenting a Joule-effect heater wire (4) at at least one, and preferably at each, of said terminal portions (3a) of the sleeve, which Joule-effect heater wire (4) is arranged, preferably as a spiral, at the outer surface (3-2) of said terminal portion (3a) of said sleeve, and heating is used to create a leaktight contact zone by melting together materials constituting at least parts respectively of said terminal portion (3a) of the sleeve and of a terminal portion (2a) of said lining in contact with each other, with said heater wire passing therethrough, by using a device according to any one of claims 1 to 9.

11. A method according to claim 10, **characterized in that** the following steps are performed, preferably on the deck of a laying ship (10) or on land:
i.1) positioning said device (20) for installing a sleeve inside said sleeve (3) in such a manner that at least a said first inflatable chamber (21) is in position facing a first terminal portion (3a) of the sleeve with its first connector (21a) facing an end of said heater wire, the other one of said first and second inflatable chambers (21, 22) facing the inside wall of the running portion (3b) of the sleeve, and inflating at least said second inflatable chamber so as to secure the device (20) for installing a sleeve with said sleeve by pressing the expandable wall of said second chamber against the inside wall of said sleeve; and
i.2) moving the resulting assembly of the sleeve and said device (20) for installing a sleeve, axially in the longitudinal direction (XX') and inserting it inside a sleeve-free open end of a pipe element (1₁) until said first terminal portion (3a) of the sleeve is in contact with said terminal portion (2a) of the lining of said female end of said pipe element; and
i.3) inflating said first inflatable chamber to press it against the inside wall of said first terminal portion of the sleeve so that said first electrical connector (21a) is connected to one end of a said heater wire (4), preferably by means of a complementary electrical connector (4a); and
i.4) electrically powering said heater wire (4) while simultaneously exerting pressure from said terminal portion of the sleeve against said terminal portion of the lining that are in contact with each other by inflating said first inflatable chamber (21) in order to implement a said weld zone by electro-fusion of the materials constituting at least parts respectively of said terminal portion of the sleeve and of a terminal portion of said lining that are in contact with each other, with said heater wire passing therebetween; and
i.5) deflating said first and second inflatable chambers and moving said device for installing a sleeve in translation in such a manner that said weld inspection device (23) is placed facing said terminal portion of the sleeve corresponding to said zone of welding by electro-fusion; and
i.6) inflating again the first and second inflatable chambers so that they press against the inside wall of the sleeve and become secured thereto, and actuating said weld inspection device to inspect said weld, preferably by injecting water against said terminal portion of the sleeve;
i.7) deflating said first and second chambers and moving said device (20) for installing a sleeve in translation in order to remove it.

12. A method of making a pipe (1) by using a device according to any one of claims 1 to 9, by assembling unitary pipe elements (1₁, 1₂), each including a said lining (2), preferably with a terminal portion (2a) of smaller thickness at each end, with a said tubular junction sleeve (3) inserted and fastened to only one end of each said pipe element (1₁, 1₂) and projecting therefrom, the projecting part of said sleeve defining a male end of each said pipe element (1₁) suitable for being assembled with a sleeve-free end defining a female end of another said pipe element (1₂), said sleeve presenting at each of its ends a terminal tubular wall portion (3a) that is preferably of thickness that is smaller than the thickness of the adjacent running portion (3b) of the tubular wall of said sleeve, said sleeve (3) presenting a Joule-effect heater wire (4) at at least one, and preferably at each, of said terminal portions (3a) of the sleeve, which Joule-effect heater wire (4) is arranged, preferably in a spiral, at the outer surface (3-2) of said terminal portion (3a) of said sleeve suitable for creating, by heating, a contact zone made leaktight by melting together the materials constituting at least parts respectively of said terminal portion of the sleeve and of a terminal portion of said lining that are in contact with each other, with said heater wire passing therebetween, by performing the following steps:
a) inserting a device (20) for installing a sleeve inside a said unitary pipe element so that said first inflatable chamber (21) is arranged with its first electrical connector facing the end of a heater wire at a terminal portion (3a) of said sleeve that is fastened thereto, and fastening said device (20) for installing a sleeve inside said sleeve by inflating a said second inflatable chamber (22) against the inside wall of said sleeve; and
b) before or after step a) forcibly inserting the sleeve portion forming said male end of a pipe element (1₂) in the female end of the other pipe element axially in the longitudinal direction (XX') until said terminal portion (3a) of the sleeve of said male end of said terminal pipe element comes into contact with said terminal portion (2a) of the lining of said female and of said pipe element to be assembled therewith; and
c) butt-welding (5) the ends of the two pipe elements together; and
d) inflating a said first inflatable chamber and connecting its said first electrical connector (21a) to the end of the heater wire at said terminal portion (3a) of the sleeve and facing it, and electrically powering said heater wire (4), while simultaneously exerting pressure from said terminal portion of the sleeve against said terminal portion of the lining that are in contact with each other in order to make a said weld zone by electro-fusion in at least a fraction of the interface between the surfaces of each said terminal portion (3a) of the sleeve and each said terminal portion (2a) of lining that are in contact with each other with the heater wire passing therebetween at the surface of the sleeve in order to make a said contact zone that is made leaktight by melting; and
e) deflating said first and second inflatable chambers and moving said device (20) for installing a sleeve (3) in translation.

13. A method according to claim 12, **characterized in that** the following steps are performed:
a.1) using a pipe-laying tower (11) of a laying ship (10) to lower a first pipe element (1₂) fitted with a said sleeve at one of its ends to the proximity of the end of the top terminal pipe element (1₁) of the pipe that is being assembled and that is partially immersed at the bottom of the tower; and
a.2) lowering a said device (20) for installing a sleeve with said first and second chambers at least partially deflated, which device is secured to a said sleeve fastened to one of said first or second pipe elements by inflating a said second chamber that is pressed against a running portion of the inside wall of the sleeve, said first chamber being placed facing a free terminal portion of said sleeve with its first connector facing one end of said heater wire;
a.3) inflating the first chamber (21) that presses against the terminal portion (3a) of said sleeve so that said electrical connector (21a) is connected to one end of said heater wire, preferably via a complementary electrical connector (4a); and
b) after or before step a.3) assembling together the two pipe elements by forcibly inserting the portion of a sleeve forming a said male end of one pipe element into the sleeve-free female end of the other pipe element;
c) butt-welding (5) the ends of the two pipe elements together; and
d.1) electrically powering said heater wire (4) while simultaneously exerting pressure from said terminal sleeve portion against said terminal lining portion that are in contact with each other by inflating said first chamber (21) in order to make a said weld zone by electro-fusion; and
d.2) deflating said first and second chambers, and moving said mandrel so that said weld inspection means (23) are placed facing said terminal sleeve portion (3a) which is electro-welded; and
d.3) inflating the first and second chambers so that they press against the inside wall of the sleeve and are secured thereto; and
d.4) actuating said weld inspection means (23) in order to inspect said weld, preferably after previously injecting water against said terminal portion of the sleeve.

14. A method according to claim 13, **characterized in that** in step d.4), the following operations are performed:
d.4.1) actuating (26) said shutter means (24) to close them so as to form a leaktight compartment (27) defined by said first inflatable chamber (21) and said shutter means (24) closing the passage inside the pipe, said leaktight compartment (27) containing said weld inspection means (23) for inspecting said weld; and
d.4.2) filling said leaktight compartment (27) with water and actuating (26) said weld inspection means in order to inspect said weld; and
d.4.3) thereafter, actuating said reversible shutter means (24) to open them.

15. A method according to any one of claims 12 to 14, **characterized in that** prior to step a), the steps i.1) to i.7) of the method of claim 11 are performed, preferably on the deck of the ship or on land, in order to fasten said sleeve at a terminal portion of a said pipe element (1₁) prior to being assembled with another said pipe element.
